(19) **Europäisches Patentamt European Patent Office Office européen des brevets**

(11) **EP 3 870 549 B1**

(12) **FASCICULE DE BREVET EUROPEEN**

(45) Date de publication et mention de la délivrance du brevet:
**06.08.2025   Bulletin 2025/32**

(21) Numéro de dépôt: **19817805.5**

(22) Date de dépôt: **21.10.2019**

(51) Classification Internationale des Brevets (IPC):
*C03C 23/00* (2006.01)      *B23K 26/03* (2006.01)
*B23K 26/042* (2014.01)     *B23K 26/046* (2014.01)
*B23K 26/08* (2014.01)      *B41M 5/26* (2006.01)
*B23K 26/00* (2014.01)      *B23K 26/0622* (2014.01)
*B23K 26/082* (2014.01)     *B23K 26/354* (2014.01)
*B23K 26/352* (2014.01)     *B23K 26/362* (2014.01)
*B23K 26/402* (2014.01)     *B23K 101/04* (2006.01)
*B23K 103/00* (2006.01)     *B41M 5/24* (2006.01)

(52) Classification Coopérative des Brevets (CPC):
**C03C 23/0025; B23K 26/0006; B23K 26/034;
B23K 26/042; B23K 26/046; B23K 26/0622;
B23K 26/082; B23K 26/0838; B23K 26/0869;
B23K 26/354; B23K 26/355; B23K 26/362;
B23K 26/402; B41M 5/262;** B23K 2101/04;  (Cont.)

(86) Numéro de dépôt international:
**PCT/FR2019/052498**

(87) Numéro de publication internationale:
**WO 2020/084239 (30.04.2020 Gazette 2020/18)**

(54) **PROCEDE ET INSTALLATION POUR LE MARQUAGE DE RECIPIENTS CHAUDS EN VERRE**

VERFAHREN UND VORRICHTUNG ZUM MARKIEREN VON HEISSEN GLASBEHÄLTERN

METHOD AND FACILITY FOR MARKING HOT GLASS CONTAINERS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **22.10.2018   FR 1859712**

(43) Date de publication de la demande:
**01.09.2021   Bulletin 2021/35**

(73) Titulaire: **TIAMA**
**69230 Saint-Genis-Laval (FR)**

(72) Inventeurs:
• **OLLIVIER, Michel**
**35690 ACIGNE (FR)**
• **GUTRIN, Anthony**
**69003 LYON (FR)**
• **PITAVAL, Dominique**
**42320 SAINT-CRISTO-EN-JAREZ (FR)**
• **SOLANE, Pierre-Yves**
**69004 LYON (FR)**

(74) Mandataire: **Cabinet Beau de Loménie**
**51 avenue Jean Jaurès**
**BP 7073**
**69301 Lyon Cedex 07 (FR)**

(56) Documents cités:
EP-A1- 2 719 643      EP-A2- 2 368 861
WO-A1-2004/000749    US-A1- 2003 052 100

(52) Classification Coopérative des Brevets (CPC):
      (Cont.)B23K 2103/54; B41M 5/24

**Description**

La présente invention concerne le domaine technique du marquage à chaud à haute cadence, de récipients en verre tels que des bouteilles ou des flacons sortant d'une machine de fabrication ou de formage.

Dans le domaine de la fabrication des récipients en verre, il est connu d'utiliser des systèmes de marquage soit en sortie de la machine de formage soit dans la partie froide du processus de fabrication, afin de réaliser un horodatage en vue d'assurer la traçabilité de la fabrication.

De manière classique, une machine de formage est constituée de différentes sections indépendantes juxtaposées, comprenant chacune au moins une cavité, les cavités étant équipées chacune d'un moule dans lequel le récipient prend sa forme finale à haute température. En fin de formage dans une section, les récipients sont extraits des cavités de la section et déposés sur des plaques d'attente en bordure d'un convoyeur de sortie. Puis des mécanismes de mise en ligne de récipients, appelés mains de ripage, déplacent les récipients en les faisant glisser sur le convoyeur de sortie de la machine de formage. L'ordre dans lequel se trouvent les récipients issus de différentes sections sur le convoyeur de sortie de la machine de formage est constant pour une production donnée, mais varie entre les productions et selon les lignes de fabrication. Autrement dit, par exemple pour une machine de 10 sections et 2 cavités par section, appelée 1O double gob, l'ordre de défilement des sections n'est pas 1..2..3..4 mais il peut être connu par avance. En sortie de la machine de formage, les récipients sont acheminés de manière à constituer une file sur un convoyeur de transport amenant les récipients à défiler successivement devant divers postes de traitement tels que de pulvérisation et de recuit.

Il apparaît intéressant de marquer les récipients le plus tôt possible à la sortie de la machine de formage de manière à ne pas créer de décalage temporel dans la détection des défauts susceptibles d'intervenir à la suite d'accumulation des récipients ou à des erreurs dans la traçabilité.

Dans l'état de la technique, diverses solutions ont été proposées pour marquer, dans une zone de marquage, des objets à haute température sortant d'une machine de formage. Par exemple, le brevet US 4 870 922 décrit un appareil de marquage par pulvérisation contrôlée d'un fluide. La tête de marquage est disposée le long du convoyeur acheminant les objets en sortie de la machine de formage. En pratique, il s'avère que le fluide déposé en surface sous la forme d'un code ou d'un marquage est altéré voire effacé, lors des opérations de manutention, remplissage ou lavage des articles en verre, inhérentes au procédé verrier.

Pour répondre aux problèmes de la tenue du code ou du marquage dans le temps, il est connu notamment par le document JP 09 128 578, d'utiliser un système de marquage par laser qui réalise des marquages ou codes sur la surface des articles, par ablation ou fusion du verre. L'intérêt de cette technologie réside dans le fait que le code est indélébile et résiste très bien aux opérations de manutention, remplissage ou lavage inhérentes au procédé verrier.

Cette technique de marquage laser est également connue pour être mise en œuvre dans la partie froide du processus de fabrication des objets en verre. Par exemple, le document EP 0 495 647 décrit une installation adaptée pour calculer la vitesse de défilement des objets de manière à assurer un marquage correspondant sur les objets. De même, les documents WO 2004/000749 et US 2003/052100 prévoient de détecter la position des objets selon sa direction de déplacement avant d'assurer une opération de marquage de l'objet. Par ailleurs, le brevet EP 2 719 643 décrit un procédé d'alignement de récipients en verre à l'aide d'une caméra d'imagerie thermique.

Toutefois, ces techniques de marquage laser présentent l'inconvénient de ne pas pouvoir assurer de manière sûre et efficace, l'ablation ou la fusion du verre. En effet, il a été constaté que le laser n'apporte pas suffisamment de puissance à l'endroit de marquage pour réaliser la fusion du verre, compte tenu que les objets ne se trouvent pas toujours dans le plan de focalisation du laser.

Il s'avère en effet que les récipients ne sont jamais parfaitement alignés en sortie de la machine de formage. L'utilisation de guides ou de mécanismes pour aligner les récipients chauds défilant en sortie de la machine de formage est à même de générer des défauts par contact avec les guides ou en créant des contacts entre les récipients en les freinant sur le convoyeur. Lorsque ces récipients en verre sont à haute température, ces contacts génèrent des défauts puisque le verre à haute température est encore déformable.

Selon le brevet EP 2 368 861, la position transversale des récipients est déterminée avant le marquage réalisé à la sortie de la machine de formage. La position est mesurée avec une caméra linéaire infra-rouge observant par-dessus les récipients en défilement. Si cette solution permet l'optimisation du marquage par la mesure de la position transversale des récipients, il a été constaté que l'environnement rempli de vapeurs et de poussières dans lequel est positionnée la caméra est à même d'affecter ses performances. Par ailleurs, il est à noter que cette caméra en surplomb des récipients, visualise généralement la partie la plus large de l'objet de sorte que cette solution n'est pas à même de déterminer avec précision la position du col des récipients de sorte que le marquage au col ne peut pas être mené à bien correctement. En effet, le système donne la position du récipient sur le convoyeur. Si un récipient présente un défaut de col penché, la position du col déduite de la position du corps est fausse.

L'objet de l'invention vise donc à remédier aux inconvénients de l'art antérieur en proposant un procédé simple et peu coûteux, adapté pour assurer en sortie d'une machine de formage, un marquage efficace par laser de récipients chauds tout en ne risquant pas de dégrader les objets lors de leur convoyage jusqu'au poste de marquage.

Pour atteindre un tel objectif, l'objet de l'invention concerne un procédé pour marquer en sortie d'une machine de formage à l'aide d'un faisceau laser, une zone de marquage sur des récipients chauds en verre posés sur un plan de convoyage d'un convoyeur et défilant en translation successivement devant un appareil laser, le procédé comportant les étapes suivantes :

- déterminer pour chaque récipient avant son marquage, la position longitudinale selon la direction de translation et la position transversale selon une direction transversale par rapport à la direction de translation de la zone de marquage ;
- déplacer selon la direction transversale le plan de focalisation du faisceau laser en fonction de la position transversale de la zone de marquage de chaque récipient pour optimiser l'opération ultérieure de marquage des récipients défilant devant le faisceau laser ;
- et à réaliser sur la zone de marquage de chaque récipient, un marquage selon un axe de marquage par le faisceau laser dont la position du plan de focalisation a été optimisée pour assurer le marquage ;

Selon l'invention, le procédé consiste pour déterminer la position longitudinale et la position transversale de la zone de marquage de chaque récipient :

- à positionner un premier axe optique d'un premier capteur de lumière et un deuxième axe optique d'un deuxième capteur de lumière de façon non parallèle entre eux, dans un plan de détection parallèle au plan de convoyage et situé à une hauteur au moins proche de la hauteur de la zone de marquage, le premier axe optique et le deuxième axe optique étant situés de manière que chaque récipient est amené à croiser chaque axe optique lors de sa translation avant le marquage, la direction des axes optiques et par rapport à la direction de déplacement et leur position par rapport à l'axe de marquage étant connues ;
- à détecter l'instant de l'intersection ou du dégagement par un récipient, du premier axe optique et l'instant de l'intersection ou du dégagement par un récipient, du deuxième axe optique ;
- et à calculer lesdites positions transversale et longitudinale à partir de ces instants et en considération d'une vitesse de translation connue ou constante des récipients ;
- le procédé consistant à partir de la détermination de la position longitudinale de la zone de marquage, à déterminer l'instant de marquage pour chaque récipient défilant devant l'appareil laser.

Selon une variante de réalisation, pour lequel par exemple, le diamètre du récipient n'est pas connu ou la section du récipient n'est pas circulaire, le procédé consiste à :

- détecter l'instant de l'intersection du premier axe optique par un récipient chaud, et
- détecter l'instant de dégagement du premier axe optique par un récipient chaud, et
- détecter l'instant de l'intersection du premier axe optique par un récipient chaud, et
- détecter l'instant de dégagement du premier axe optique par un récipient chaud ;

pour en déduire la position transversale et longitudinale du centre de symétrie centrale de la section par le plan de détection, de l'enveloppe de chaque récipient, et pour déduire la position longitudinale de la zone de marquage à partir d'au moins la position longitudinale du centre de symétrie, et pour déduire la position transversale de la zone de marquage à partir d'au moins la position transversale du centre de symétrie.

Selon une caractéristique avantageuse de réalisation, on positionne les axes optiques des capteurs de lumière de sorte que le plan de détection soit sécant à la zone de marquage et de préférence au milieu de la zone de marquage.

La variation de la position transversale des récipients est à même de conduire à une variation d'un récipient à l'autre, des dimensions verticale et horizontale du marquage. Dans le cas d'un marquage tel un code DATAMATRIX, destiné à une lecture automatique, une telle variation des dimensions du code présente un risque de mauvaise lecture.

Un autre objet de l'invention vise à remédier aux inconvénients de l'art antérieur en proposant un procédé adapté pour assurer, quelle que soit la position transversale du récipient, un marquage présentant des dimensions correspondant à celles souhaitées.

Pour atteindre un tel objectif, l'objet de l'invention concerne un procédé selon lequel on prend en compte la mesure de la position transversale de la zone de marquage pour commander l'appareil laser en adaptant au moins les déplacements horizontaux du faisceau laser en fonction de la vitesse de déplacement et de la position transversale de la zone de marquage de chaque récipient afin de maintenir constante au moins la largeur de la zone de marquage.

Il s'avère que les récipients sont orientés sur le convoyeur de sortie, avec des angulations différentes par rapport à la direction de déplacement. Pour des récipients de forme circulaire, ce positionnement pose problème uniquement si la zone de marquage doit être réalisée dans une position précise sur le récipient. Dans le cas de récipients de forme non circulaire, présent par exemple, une face plane au centre de laquelle doit être réalisé le marquage, il s'ensuit que la face du récipient n'est pas normale au faisceau laser. Il s'ensuit que la géométrie du marquage est modifiée. Dans le cas d'un marquage tel un code DATAMATRIX destiné à une lecture automatique, une telle déformation du code présente un risque de mauvaise lecture.

Un objet de l'invention vise à remédier aux inconvénients de l'art antérieur en proposant un procédé adapté pour assurer quel que soit l'orientation des récipients par rapport à la direction de translation, un marquage de qualité correspondant à celui souhaité.

Pour atteindre un tel objectif, l'objet de l'invention concerne un procédé dans lequel à partir des quatre instants d'intersection et de dégagement du premier capteur et du deuxième capteur, on détermine l'orientation de la section du récipient par le plan de détection de l'enveloppe de chaque récipient, et en fonction de ladite orientation, on :

- détermine la position transversale et la position longitudinale de la région de marquage ;
- et/ou pilote le dispositif de balayage pour obtenir un marquage avec une géométrie conforme à celle souhaitée ;
- et/ou délivre une information d'alerte lorsque l'orientation dépasse une valeur de qualité de marquage.

Les techniques de marquage laser des récipients reposent sur l'ablation ou la fusion du verre. Il a été constaté certaines fois que le marquage réalisé ne présente pas une bonne qualité c'est-à-dire que le relief du marquage est insuffisant pour permettre une lecture optique et/ou que des défauts sont créés au niveau des impacts du faisceau laser. Par ailleurs, il est important que la géométrie du marquage et sa position sur les récipients soient celles attendues, pour des raisons esthétiques et surtout pour faciliter la lecture automatique dans le cas de codes barre ou matriciels.

Un objet de l'invention vise à remédier aux inconvénients de l'art antérieur en proposant un procédé adapté pour assurer en sortie d'une machine de formage, un marquage présentant une bonne qualité.

Pour atteindre un tel objectif, l'objet de l'invention concerne un procédé dans lequel un pyromètre optique de surveillance est disposé pour fournir à partir de la radiation infra-rouge émise par les récipients chauds, une mesure de la température de la zone de marquage au moment où ladite zone coupe son axe optique, afin de déterminer si ladite température est supérieure à un seuil de température tel que la gravure est de bonne qualité.

Dans le cas où la mesure de température de la région de marquage est inférieure à un seuil déterminé, au moins une des actions suivantes est opérée :

- positionnement d'un signal d'alarme, éventuellement repris par une alerte visuelle, sonore ou autre, destinée aux opérateurs de la ligne ;
- le non marquage du récipient dont la mesure de température est insuffisante ;
- la mise en fonctionnement d'un dispositif de réchauffage de la zone de marquage, situé en amont de l'appareil laser ;
- une modification du procédé de formage des récipients, visant à relever la température de la zone de marquage.

La hauteur à laquelle la zone de marquage est positionnée dépend des besoins de la production et de la forme des récipients. En fonction des conditions d'exploitation, de l'atmosphère ambiant, mais aussi des récipients en verre plus ou moins chauds, des phénomènes de dilatation entraînent des déformations du convoyeur de sortie, de sorte qu'en particulier, la hauteur du convoyeur de sortie change à l'endroit du poste de marquage. Ces changements spontanés et involontaires de hauteur du convoyeur, d'amplitude pouvant atteindre +/- 1cm et qualifiées de dérive de hauteur peuvent donc modifier la hauteur de marquage.

Un objet de l'invention vise à remédier aux inconvénients de l'art antérieur en proposant un procédé adapté pour assurer en sortie d'une machine de formage, un marquage présentant un positionnement correct de la zone de marquage sur le récipient et par rapport au récipient.

Pour atteindre un tel objectif, l'objet de l'invention concerne un procédé selon lequel on mesure au moins régulièrement, la hauteur du plan de convoyage, et en ce que l'unité de commande pilote, en fonction de la mesure de hauteur du plan de convoyage, des moyens de réglage en hauteur de la position de l'appareil laser pour maintenir la zone de marquage ou l'axe de marquage à une hauteur fixe par rapport au plan de convoyage.

Selon une variante de réalisation, on mesure au moins régulièrement, la hauteur du plan de convoyage, et en ce que l'unité de commande pilote, en fonction de la mesure de hauteur du plan de convoyage, le système de balayage du faisceau laser pour maintenir la zone de marquage à une hauteur fixe par rapport au plan de convoyage.

En fonction de la production, le convoyeur de sortie peut avoir une pente variable, donc une inclinaison par rapport au sol. Si le convoyeur n'est pas horizontal, alors l'axe des récipients n'est pas vertical, et surtout le plan de convoyage n'est pas horizontal. Or si le balayage du faisceau laser n'est pas adapté le marquage peut présenter une déformation en losange, pour finalement ne plus correspondre à la forme souhaitée.

Un objet de l'invention vise à remédier aux inconvénients de l'art antérieur en proposant un procédé adapté pour assurer en sortie d'une machine de formage, un marquage présentant une géométrie correcte de la zone de marquage sur le récipient et par rapport au récipient.

Pour atteindre un tel objectif, l'objet de l'invention concerne un procédé selon lequel on prend en compte l'inclinaison du plan de convoyage et on pilote le système de balayage du faisceau laser afin de conserver la géométrie du marquage.

Un autre objet de l'invention est de proposer une installation pour marquer, en sortie d'une machine de formage, des récipients chauds en verre posés sur un plan de convoyage d'un convoyeur et défilant successivement, à une vitesse de translation constante ou connue, devant un appareil laser, l'installation comportant :

- un système pour déterminer avant leur marquage, la position longitudinale de la région de marquage selon la direction de translation des récipients et la position transversale de la région de marquage dans une direction transversale à la direction défilement des récipients ;
- un appareil laser comportant un générateur de faisceau laser selon un axe de marquage ;
- et une unité de commande configurée pour piloter un dispositif pour déplacer selon la direction transversale le plan de focalisation du faisceau laser en fonction de la position transversale de la région de marquage pour optimiser l'opération de marquage des récipients défilant devant le faisceau laser. Selon l'invention, le système pour déterminer la position longitudinale et la position transversale de la zone de marquage de chaque récipient comporte :
- un premier capteur de lumière présentant un premier axe optique et un deuxième capteur de lumière présentant un deuxième axe optique, ces axes optiques étant positionnés de façon non parallèle entre eux, dans un plan de détection parallèle au plan de convoyage et situé à une hauteur au moins proche de la hauteur de la zone de marquage, le premier axe optique et le deuxième axe optique étant situés de manière que chaque récipient est amené à croiser chaque axe optique lors de sa translation, la direction des axes optiques par rapport à la direction de déplacement et leur position par rapport à l'axe de marquage étant connues ;
- et une unité de traitement détectant l'instant de l'intersection ou du dégagement par un récipient, du premier axe optique et l'instant de l'intersection ou du dégagement par un récipient, du deuxième axe optique, et calculant lesdites positions transversale et longitudinale à partir de ces instants et en considération d'une vitesse de translation connue ou constante des récipients, cette unité de traitement déterminant l'instant de marquage pour chaque récipient défilant devant le poste de marquage, à partir de la détermination de la position longitudinale de la zone de marquage.

Diverses autres caractéristiques ressortent de la description faite ci-dessous en référence aux dessins annexés qui montrent, à titre d'exemples non limitatifs, des formes de réalisation de l'objet de l'invention.

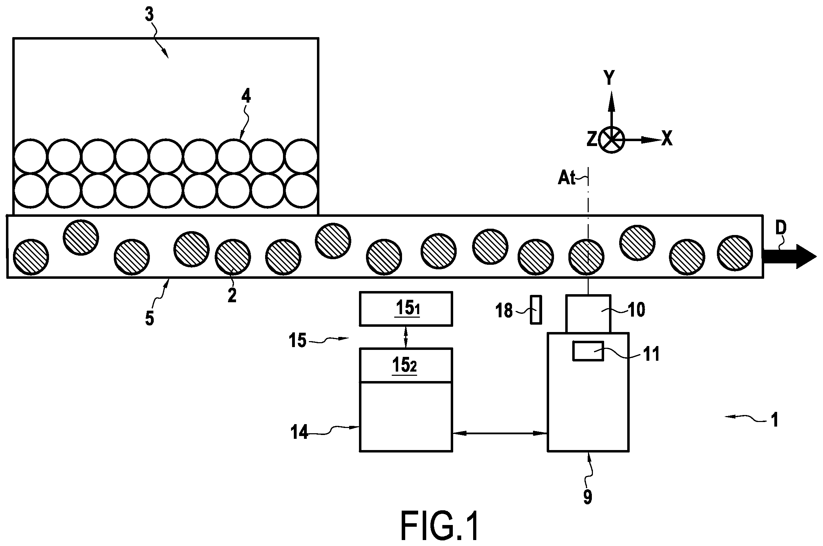

La **Figure 1** est une vue schématique illustrant un exemple de réalisation d'une installation de marquage conforme à l'invention.

Les **Figures 2** et **3** sont des vues respectivement en perspective et de côté montrant des caractéristiques de l'installation conforme à l'invention.

La **Figure 4** est un schéma simplifié montrant les différentes positions d'un récipient de section circulaire dans le plan de détection par rapport à des capteurs de lumière permettant d'illustrer les calculs pour déterminer la position transversale et la position longitudinale du récipient par rapport à l'appareil laser.

La **Figure 5** est un schéma montrant les signaux de sortie des capteurs de lumière et des instants de l'intersection et de dégagement du récipient par rapport aux capteurs de lumière, pour les différentes positions du récipient illustrées à la **Fig. 4.**

Les **Figure 6A et 6B** sont des vues respectivement en perspective et de dessus montrant des récipients de forme rectangulaire présentant deux orientations autour de l'axe vertical différentes par rapport à la direction de translation.

La **Figure 6C** est une vue de détail montrant l'axe de tir du faisceau laser sur la face du récipient.

Les **Figures 7A et 7B** illustrent des exemples d'orientation des axes optiques pour des capteurs de lumière.

La **Figure 8A** est une vue montrant la déformation du marquage en forme de trapèze lorsque le récipient présente une orientation non nulle autour de l'axe vertical.

La **Figure 8B** est une vue montrant la déformation du marquage en forme de losange lorsque le plan de convoyage est incliné.

L'objet de l'invention concerne une installation **1** permettant de marquer ou de graver à chaud des récipients en verre **2** tels que par exemple des bouteilles ou des flacons en verre.

L'installation **1** est placée de manière à assurer le marquage des récipients **2** sortant d'une machine de fabrication ou de formage **3** et présentant ainsi chacun une haute température. La machine de formage **3** comporte de manière classique, une série de cavités **4** assurant chacune le formage d'un récipient **2**. De manière connue, les récipients **2** qui viennent d'être formés par la machine **3** sont posés sur un plan de convoyage **Pc** d'un convoyeur de sortie **5** défini par des axes **X, Y.** Les récipients **2** constituent ainsi une file sur le convoyeur **5**. Les récipients **2** sont ainsi acheminés les uns à la suite des autres à différents postes de traitement selon une direction de translation ou de défilement **D** parallèle à la direction **X.** De manière classique, le plan de convoyage **Pc** est généralement horizontal.

Il est à noter que les récipients déposés successivement sur le convoyeur de sortie **5** ne sont pas alignés très précisément le long de la direction **X.** Dans la mesure où les récipients **2** sont chauds, l'installation ne comporte pas un système mécanique permettant d'aligner par contact les récipients pour éviter par le contact, la création de défauts divers tels que stress, glaçures ou des déformations, frottoirs, etc.. Les récipients **2** possèdent ainsi des positions aléatoires selon la direction transversale **Y.**

L'installation de marquage **1** est placée en relation du convoyeur de sortie **5** de la machine de formage **3** pour assurer le marquage des récipients alors qu'ils sont encore chauds. L'installation de marquage **1** est ainsi placée en sortie de la machine de formage **3** sur le trajet du convoyeur de sortie **5** qui assure ainsi le défilement successif devant l'installation selon le sens de défilement **D,** des récipients **2** à haute température.

L'installation de marquage **1** comporte un appareil **9** de production d'un faisceau laser **F** de tous types connus en soi. Dans la description qui suit, l'appareil laser **9** présente un axe de marquage **At** qui correspond à l'axe optique de la lentille frontale ou de sortie. L'axe de marquage **At** est dirigé généralement selon la direction **Y** transversale au déplacement. L'appareil laser **9** selon l'invention comporte de manière classique, un dispositif de balayage **10** ou scanner, en amont de la lentille de sortie, protégée par la fenêtre de sortie du faisceau laser. Cette lentille de sortie dite Ftheta met en forme le faisceau laser pour concentrer la puissance à l'emplacement de marquage. Le dispositif de balayage **10** permet par son pilotage, de déplacer angulairement la direction du faisceau laser, à travers la lentille de sortie et autour de l'axe de marquage **At.** Ainsi l'axe de marquage **At** est par exemple l'axe optique de la lentille Fthéta, il est dirigé généralement selon la direction **Y** transversale au déplacement. L'appareil laser **9** selon l'invention comporte également un dispositif de déplacement **11** du plan de focalisation du faisceau laser **F** d'avant en arrière selon la direction de l'axe marquage **At** à savoir la direction transversale **Y.** En d'autres termes, l'appareil laser **9** comporte des moyens pour réaliser des corrections optiques de manière à déplacer la position du plan de travail du laser transversalement par rapport à la direction **D** de défilement des objets, c'est-à-dire dans l'exemple illustré, perpendiculaire au plan défini par les axes **X, Z.** Par exemple, l'appareil laser **9** comporte en tant que dispositif de déplacement **11,** un système optique motorisé piloté en déplacement.

Dans l'exemple illustré, le faisceau laser **F** présente une direction sensiblement perpendiculaire à la direction de convoyage **D** c'est-à-dire perpendiculaire au plan défini par les axes **X, Z.** Bien entendu, il peut être envisagé que le dispositif de balayage **10** oriente le faisceau laser **F** selon une direction transversale différente d'une direction perpendiculaire telle qu'inclinée par rapport à la direction de convoyage **D.** En tout état de cause, le dispositif **11** assure le déplacement du plan de focalisation du faisceau laser **F,** selon une direction transversale **Y** par rapport à la direction de convoyage **D,** c'est-à-dire selon une direction **Y** qui coupe cette direction de convoyage **D.**

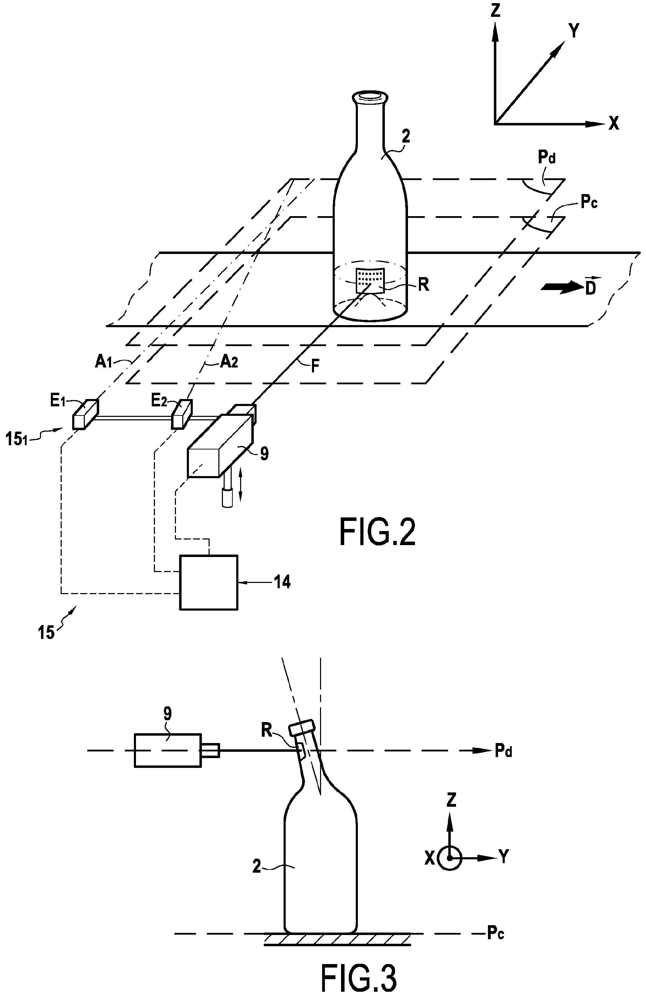

L'appareil laser **9** réalise sur chaque récipient, un marquage dans une zone ou région de marquage **R** du récipient **2.** La zone ou région de marquage **R** désigne une région ou une portion de la paroi de chaque récipient, la même généralement sur chaque récipient, qui va recevoir le marquage. La zone de marquage **R** est positionnée selon une hauteur précise du récipient choisie selon divers critères et par exemple prise par rapport au fond du récipient. Comme illustré aux **Fig. 2** et **3,** la zone de marquage **R** est située sur le corps ou le col d'un récipient. Le marquage se fait généralement à la surface externe des récipients, donc la zone de marquage est une portion de la surface de la paroi. Mais l'invention peut s'appliquer lorsque le marquage est fait dans l'épaisseur de la paroi des récipients en verre creux.

Chaque marquage peut être réalisé en alphanumérique ou par un codage symbolique comme un code barre ou un code DATAMATRIX. Les informations peuvent être cryptées ou en claires. Le marquage peut comporter plusieurs éléments comme par exemple un code DATAMATRIX et une information alphanumérique.

Le marquage comporte ainsi des motifs correspondant aux impacts du faisceau laser sur le récipient. Dans le cas d'un code DATAMATRIX, les motifs sont des creux correspondant chacun à un impact du laser pulsé, chaque creux constituant un point du code à points. Dans la cas d'un code alphanumérique, les motifs sont des lettres ou des chiffres.

Dans le cas d'un code DATAMATRIX, la région de marquage **R** se réduit à un carré. Dans le cas où le marquage est un texte, la région de marquage **R** est définie par exemple horizontalement, par la longueur du texte et verticalement, par la hauteur des caractères. Si le marquage est composé de 2 éléments graphiques différents et décalés l'un par rapport à l'autre, la zone de marquage est la région qui peut les contenir.

De manière avantageuse, l'appareil laser **9** est synchronisé avec la machine de formage **3,** de manière à réaliser sur chaque récipient, un marquage donnant au moins une information dépendante de la cavité d'origine de formage. Ainsi, il peut être prévu de marquer par exemple le numéro du moule ou de la cavité d'origine de formage. La synchronisation consiste par exemple à enregistrer dans la mémoire de l'appareil laser, l'ordre de sortie des sections de la machine de formage **3,** donc l'ordre de défilement des récipients dans le poste de marquage, selon leur cavité d'origine.

Il est à noter que l'installation de marquage **1** peut réaliser, sur chaque récipient **2,** un marquage donnant des informations, par exemple sur la machine de formage, la ligne de fabrication et/ou l'usine de fabrication et/ou l'instant de marquage, constituant de préférence une identification unique pour chacun des récipients.

L'installation de marquage **1** comporte une unité de commande **14** ou contrôleur, configurée pour piloter le fonctionnement de l'appareil laser **9.** L'installation de marquage **1** comporte également un système de détermination **15** de la position de chaque récipient **2** selon la direction **Y** transversale à la direction de translation **D** des récipients et de la position longitudinale **X** de la région de marquage **R** selon la direction de translation **D** des récipients. Ce système de détermination **15** comporte un système de capteurs **15₁** placé en amont de l'appareil laser **9** en considération du sens de défilement D. Ce système de capteurs **15₁** qui détecte le passage de chaque récipient, est connecté à une unité de

traitement $15_2$ configurée pour déterminer les positions transversale et longitudinale de la région de marquage **R.**

Ce système de détermination **15** transmet à l'unité de commande **14,** la position de la région de marquage R de chaque récipient **2** selon la direction transversale **Y** permettant de piloter le dispositif de déplacement **11** de l'appareil laser **9.** Cette unité de commande **14** permet ainsi d'adapter en fonction de la position transversale des récipients à marquer, le plan de focalisation du faisceau laser F de manière que ce dernier puisse, lorsque les récipients passent devant l'appareil **9,** assurer un marquage convenable des récipients.

Ce système de détermination **15** transmet également à l'unité de commande **14,** la position de chaque récipient **2** selon la direction longitudinale **X** permettant de piloter l'appareil laser **9** afin d'assurer le marquage dans la zone de marquage **R.** A partir de la détermination de la position longitudinale de la zone de marquage, l'unité de commande **14** détermine l'instant de marquage pour chaque récipient de manière que l'appareil laser **9** assure le marquage lorsque chaque récipient défile devant l'appareil laser. Bien entendu, l'unité de commande **14** détermine l'instant de marquage à partir de la connaissance de la vitesse **Vt** de translation du convoyeur et de la position de l'axe de marquage **At** selon la direction longitudinale par rapport à la position du récipient.

Plus exactement, l'opération de marquage a une certaine durée, durant laquelle la direction du faisceau laser **F** est déplacée angulairement de haut en bas et de gauche à droite autour de l'axe de marquage **At** pour que l'impact du faisceau laser parcourt la zone de marquage **R** en fonction notamment des motifs à marquer et de la vitesse du convoyeur. L'instant de marquage est donc en réalité, par exemple et pour simplifier, l'instant de début de l'opération de marquage.

Lorsque la vitesse du convoyeur est constante, il suffit que l'unité de commande **14** dispose de la valeur de la vitesse en mémoire. Sinon, la vitesse du convoyeur peut être connue à tout instant de différentes manières.

Il peut être prévu un dispositif de mesure de la vitesse de déplacement du convoyeur connecté à l'unité de commande **14.** Selon une première solution, l'unité de commande reçoit le signal « top machine IS » de la machine de formage. Ce top de la machine de formage, ci-après top machine, est un signal déclenché à chaque cycle complet de la machine de formage c'est-à-dire par exemple chaque fois que l'ensemble des moules a été vidé une fois. Si la cadence de fabrication augmente ou diminue, la fréquence du top machine change proportionnellement, ainsi que la vitesse du convoyeur. Le top machine de la machine de formage renseigne sur la cadence donc sur la vitesse de convoyage. Alternativement, l'unité de commande **14** déclenche le marquage à partir d'un décompte d'un nombre donné d'impulsions délivrées par un codeur informant de l'avance réelle du convoyeur, ce qui est équivalent à connaître la vitesse **Vt** et un temps.

Selon une troisième possibilité il peut être prévu d'utiliser deux capteurs optiques d'axes parallèles, séparés d'une distance connue. On peut selon cette possibilité utiliser un troisième axe optique parallèle et associé au premier ou au deuxième axe optique. Il suffit de prendre en compte le temps qui s'écoule entre deux évènements d'intersection ou de libération des deux axes optiques de ces capteurs pour en déduire la vitesse des récipients et celle du convoyeur. En l'absence de glissement, la vitesse des récipients est aussi la vitesse du convoyeur de sortie.

L'unité de commande **14** est réalisée par l'intermédiaire de tous systèmes informatiques et peut avantageusement intégrer l'unité de traitement $15_2$ du système de détermination **15.** Par exemple, cette unité de commande **14** est configurée pour déterminer ou stocker la vitesse du convoyeur, déterminer les positions transversales et longitudinales de la région de marquage **R,** la distance de focalisation, l'instant de tir, le contenu de l'information à graver, commander l'appareil laser, le dispositif de balayage **10** et le dispositif de déplacement **11** du plan de focalisation. Cette unité de commande **14** est synchronisée à la machine de formage 3 par l'ordre sortie inscrit dans sa mémoire ou éventuellement par sa liaison à des signaux de la machine de formage, en particulier le top machine.

Le fonctionnement de l'installation **1** conforme à l'invention découle directement de la description qui précède. Lors du passage des récipients **2** devant le système de capteurs $15_1$ du système de détermination **15,** les récipients **2** sont détectés et leurs positions transversales sur le convoyeur selon l'axe **Y** et leurs positions longitudinales selon l'axe **X** sont mesurées. Après le passage du récipient devant le système de capteurs $15_1$ et avant son passage devant l'appareil laser **9,** la mesure de la position du récipient sur le convoyeur est calculée par le système de détermination **15** et plus particulièrement par l'unité de traitement $15_2$. L'unité de commande **14** calcule les corrections optiques à apporter éventuellement au faisceau laser pour piloter en conséquence le système de déplacement **11** du plan de focalisation de l'appareil laser **9.** Le plan focal ou de travail du faisceau laser est donc adapté à la position du récipient avant son passage devant l'appareil laser **9.** Ce plan de focalisation est l'endroit le long du faisceau où l'énergie est maximale pour réaliser la fusion ou l'ablation de matière sur le récipient **2** lors du marquage. Le dispositif de déplacement **11** déplace le plan de focalisation du faisceau laser pour ainsi optimiser le marquage réalisé sur le récipient. L'unité de commande **14** pilote l'appareil laser **9** pour déclencher le marquage lorsque le récipient passe devant l'appareil laser.

Il doit donc être compris que le procédé selon l'invention comporte une étape de détermination avant leur marquage, de la position des récipients, selon une direction **Y** transversale à la direction de translation **D** des récipients et une étape d'adaptation du plan de focalisation du faisceau laser **F** en fonction de la position des récipients à marquer de manière qu'ensuite, le faisceau laser puisse assurer une opération de marquage des récipients passant devant le faisceau laser **F.** L'opération de marquage est donc assurée par le faisceau laser **F** dont la position du plan de focalisation plus exactement la plage de distances selon la direction **At** dans laquelle le faisceau est suffisamment concentré pour contenir le maximum d'énergie, a été préalablement optimisée pour assurer le marquage des récipients. Il est à noter que ce procédé est mis en œuvre pour chaque récipient défilant devant l'appareil laser **9.** Bien entendu, l'étape d'adaptation du plan de focalisation peut être facultative dans le cas où deux récipients consécutifs occupent la même position transversale sur le convoyeur.

Conformément à l'invention, le système **15** pour déterminer la position longitudinale et la position transversale de la zone de marquage **R** de chaque récipient comporte en tant que système de capteurs **15$_1$**, au moins un premier capteur de lumière **E1** présentant un premier axe optique **A1** et un deuxième capteur de lumière **E2** présentant un deuxième axe optique **A2.** Un capteur de lumière **E1, E2** comprend généralement, par exemple, un capteur photo-électrique ayant une certaine sensibilité spectrale, convertissant la lumière reçue en signal électrique, et un moyen de focalisation de la lumière sur le capteur photo-électrique. Le moyen de focalisation de type lentille ou objectif, est généralement adapté pour focaliser un faisceau parallèle étroit, qui détermine dans l'espace une barrière virtuelle dont le franchissement par un objet modifie la lumière perçue. Le capteur optique possède donc un axe optique qui correspond à une droite ou segment de droite dans l'espace traversé par les récipients en défilement.

Les axes optiques **A1** et **A2** des capteurs de lumière **E1, E2** sont positionnés de façon non parallèle entre eux, dans un plan de détection **Pd** parallèle au plan de convoyage **Pc** et situé à une hauteur au moins proche de la hauteur de la zone de marquage **R.** Il doit être compris que le plan de détection dans lequel la position transversale de la zone de marquage est déterminée doit correspondre autant que possible à la zone de marquage ou éventuellement à une zone ayant de par la forme du récipient, la même position transversale que cette zone de marquage. De manière avantageuse, les axes optiques **A1** et **A2** des capteurs de lumière sont positionnés de sorte que le plan de détection **Pd** soit sécant à la zone de marquage **R** et de préférence soit sécant au milieu de la zone de marquage **R.** En d'autres termes, le plan de détection **Pd** contient avantageusement l'axe de marquage **At.** Une telle disposition permet de détecter avec précision la position réelle de la zone de marquage **R,** comme celle du col d'un récipient pouvant ou non présenter un col penché **(Fig. 3).**

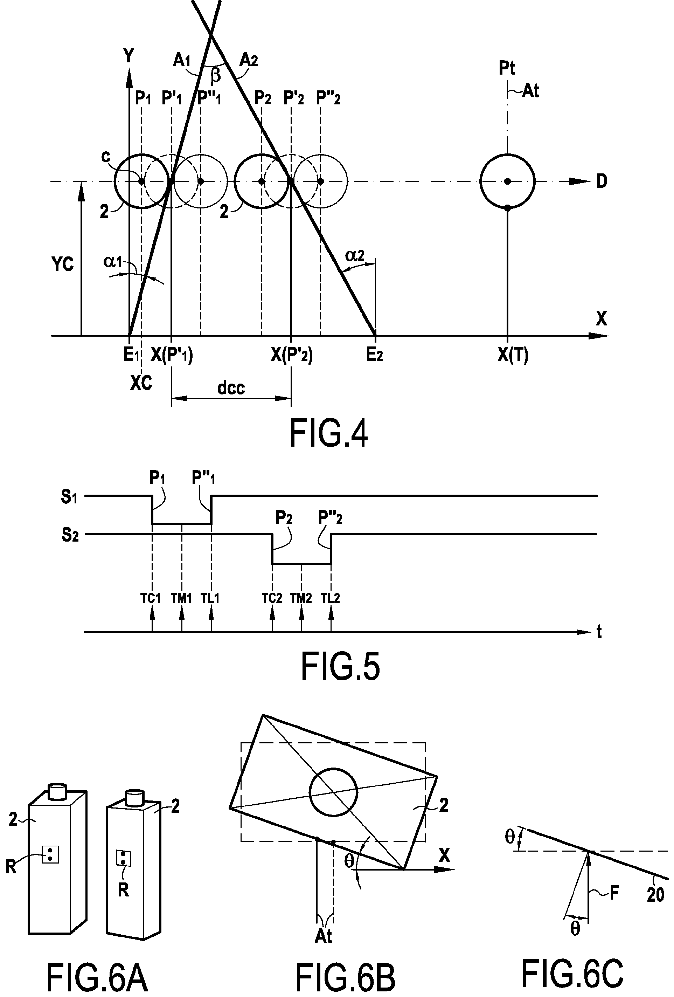

Les capteurs de lumière **E1, E2** sont montés de manière fixe par rapport aux récipients en translation. Tel que cela ressort de la **Fig. 4,** les axes optiques **A1** et **A2** sont positionnés de manière que chaque récipient **2** est amené à croiser chaque axe optique lors de sa translation. Ainsi, chaque capteur de lumière **E1, E2** est adapté pour détecter l'instant où un récipient **2** coupe ou vient couper son axe optique et l'instant où à la suite de la translation du récipient **2,** ce récipient interrompt la coupure de l'axe optique c'est-à-dire libère l'axe optique.

Selon une première variante de réalisation, au moins un capteur de lumière **E1, E2** comporte un émetteur de lumière et un récepteur de lumière, disposés de part et d'autre de la trajectoire de translation des récipients.

Selon une deuxième variante de réalisation, au moins un capteur de lumière **E1, E2** comporte un émetteur de lumière et un récepteur de lumière, disposés du même côté de la trajectoire de translation des récipients. Un réflecteur de lumière est disposé selon le côté opposé pour renvoyer en direction du récepteur, la lumière provenant de l'émetteur de lumière.

Selon ces variantes, chaque capteur de lumière reçoit selon son axe optique, en l'absence de récipient coupant son axe optique, un faisceau de lumière. Les instants de l'intersection et de dégagement sont détectés respectivement par la disparition et l'apparition de lumière reçue par le récepteur de lumière lors du passage d'un récipient.

Selon une troisième variante de réalisation, un capteur de lumière **E1, E2** est un capteur de lumière infrarouge ou un pyromètre optique. Un tel pyromètre optique dit de localisation est sensible à la radiation infra-rouge émise par les récipients chauds, de manière à recevoir selon son axe optique la lumière infra-rouge émise par un récipient croisant son axe optique. Les instants de l'intersection et de dégagement sont détectés respectivement par l'apparition et la disparition de la lumière infra-rouge reçue par le pyromètre optique de localisation lors du passage d'un récipient.

Le système de détermination **15** détecte l'instant de l'intersection ou du dégagement par un récipient **2,** du premier axe optique **A1** et l'instant de l'intersection ou du dégagement par un récipient, du deuxième axe optique **A2.** Puis, le système de détermination **15** calcule la position transversale et la position longitudinale de la zone de marquage du récipient **2** à partir de ces instants et en considération d'une vitesse de translation connue et/ou constante des récipients. Le système de détermination **15** détermine aussi l'instant de marquage pour chaque récipient défilant devant le poste de marquage, à partir de la détermination de la position longitudinale de la zone de marquage.

La description qui suit décrit des exemples de calculs pour déterminer la position transversale de la zone de marquage du récipient **2** à partir de l'instant de l'intersection ou du dégagement par un récipient **2,** du premier axe optique **A1** et de l'instant de l'intersection ou du dégagement par un récipient, du deuxième axe optique **A2.** Les calculs sont présentés pour indiquer la démarche à l'homme du métier dans une configuration particulière des axes optiques **A1** et **A2** et dans le cas fréquent où les récipients sont de section circulaire dans le plan de détection **Pd.**

La **Fig. 4** est une vue du plan de détection **Pd,** plan parallèle au plan de convoyage **Pc.** Cette **Figure** est simplifiée pour permettre un raisonnement géométrique conduisant à la détermination de la position transversale de la zone de marquage du récipient **2.** Le convoyeur de sortie **5** est représenté par la trajectoire de déplacement dans la direction D. Les axes optiques **A1** et **A2** des capteurs de lumière **E1, E2** sont représentés par des droites. Considérant par exemple le repère **X, Y,** les axes optiques **A1** et **A2** coupent l'axe longitudinal **X** en deux points respectivement **E1** et **E2.** Les angles $\alpha_1$

EP 3 870 549 B1

et $\alpha_2$ sont les angles non signés des axes optiques **A1** et respectivement **A2** avec l'axe transversal **Y.**

Sur la **Fig. 4,** le repère orthonormé avec un axe longitudinal **X** et un axe transversal **Y** est situé avec son origine en un point **E1.** Les récipients **2** se déplacent de gauche à droite dans la direction **D** parallèle à l'axe longitudinal **X.** Les récipients **2** sont représentés par un cercle correspondant à la section de l'enveloppe du récipient située dans le plan de détection **Pd.** Chaque centre **C** d'un récipient a des coordonnées **XC** et **YC.** La **Fig. 4** simplifiée correspond approximativement à un dispositif dans lequel les points **E1** et **E2** peuvent symboliser les centres optiques des capteurs de lumière avec l'intersection des axes optiques **A1, A2** située sur le convoyeur de sortie.

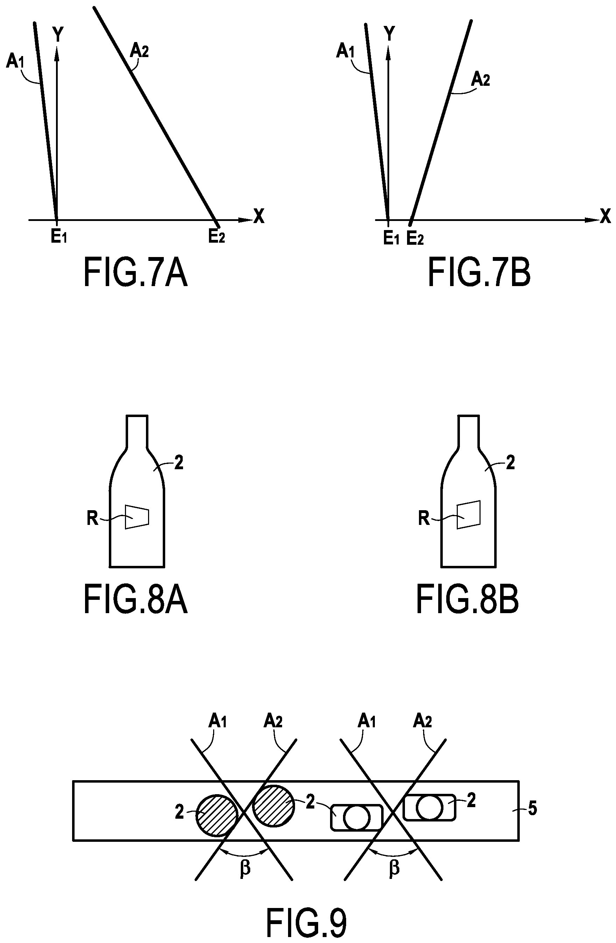

Dans l'exemple illustré à la **Fig. 4,** les axes optiques **A1** et **A2** sont concourants en un point situé selon l'axe longitudinal **X** entre les points **E1** et **E2** et selon l'axe transversal **Y** à main gauche des récipients en translation. Par exemple le point concourant des axes optiques **A1** et **A2** est situé sur la rive gauche du convoyeur de sortie. Cette configuration correspond à un angle $\alpha_1$ positif dans le sens horaire et $\alpha_2$ positif dans le sens trigonométrique. L'homme du métier peut facilement adapter le calcul à d'autres configurations d'axes optiques comme celles illustrées à la **Fig. 7A,** où le point concourant des axes optiques **A1** et **A2** est situé selon l'axe longitudinal **X** en amont de **E1,** et à la Fig.7B où le point concourant des axes optiques **A1** et **A2** est situé selon l'axe transversal **Y,** à main droite des récipients en translation.

Puisque le déplacement des récipients est théoriquement parallèle à l'axe longitudinal **X,** la position transversale **YC** du centre du récipient ne varie pas durant le déplacement, donc reste constant pendant le croisement des axes optiques de détection **A1, A2,** et de l'axe de marquage **At.**

La position longitudinale **XC** du centre **C** du récipient varie avec la translation de vitesse **Vt** de sorte que cette position longitudinale du récipient par rapport à l'axe de marquage **At** varie, donc **XC(t).** La vitesse **Vt** étant connue, il suffit de connaître **XC(t)** à un instant **t** pour prévoir sa valeur à un autre instant, ou réciproquement le temps qui s'écoule entre une position et une autre. Dans le cas où la vitesse **Vt** du convoyeur de sortie est supposée constante, une durée $\Delta$**t** correspond proportionnellement au déplacement parcouru donc une longueur **d** = **Vt** x **At.**

En amont du poste de marquage c'est-à-dire avant que les récipients ne croisent l'axe de marquage **At,** le centre **C** des récipients passe successivement dans la configuration illustrée par six positions remarquables. Les positions **P1, P'1** et **P"1** correspondent aux positions du centre **C** du récipient lorsque respectivement le récipient vient couper le premier axe optique **A1,** le centre du récipient vient couper le premier axe optique **A1,** et le récipient vient libérer le premier axe optique **A1.** De même, les positions **P2, P'2** et **P"2** correspondent aux positions du centre C du récipient lorsque respectivement le récipient vient couper le deuxième axe optique **A2,** le centre **C** du récipient vient couper le deuxième axe optique **A2,** et le récipient vient libérer le deuxième axe optique **A2.** Bien entendu, un autre point du récipient différent du centre **C** aurait pu être pris pour caractériser ces positions caractéristiques.

La **Fig. 5** montre à titre d'exemple le niveau des signaux de sortie **S1, S2** des capteurs de lumière **E1, E2** qui changent d'état entre les positions **P1** et **P"1** et **P2** et **P"2.** Par ailleurs, les instants **TC1, TM1** et **TL1** correspondent aux instants où respectivement le récipient vient couper le premier axe optique **A1** (instant de l'intersection), le centre du récipient vient couper le premier axe optique **A1,** et le récipient vient libérer le premier axe optique **A1** (instant de dégagement). De même, les instants **TC2, TM2** et **TL2** correspondent aux instants où respectivement le récipient vient couper le deuxième axe optique **A2** (instant de l'intersection), le centre du récipient vient couper le deuxième axe optique **A2,** et le récipient vient libérer le deuxième axe optique **A2** (instant de dégagement).

Lorsque le diamètre externe **Ø** du récipient est connu, les positions transversale **YC** et longitudinale **XC** du centre du récipient peuvent être déterminées de la manière suivante, par exemple pour les positions **P'1** et **P'2.**

Soit **TM1** (resp. **TM2**) l'instant où le centre **C** du récipient croise l'axe optique **A1** (resp. **A2**) en un point **P'1** (resp. **P'2**).

$$TM_1 = TC_1 + \frac{\emptyset/2}{Vt \times \cos(\alpha_1)} \quad TM_2 = TC_2 + \frac{\emptyset/2}{Vt \times \cos(\alpha_2)}$$

Notons que $\emptyset/2$ est le rayon de la section de forme circulaire d'un récipient rond ou du col d'un article de forme.

Soit *dcc* la distance parcourue entre ces deux positions **P'1** et **P'2** où le centre C du récipient croise les axes optiques **A1, A2.**

$$dcc = (TM_2 - TM_1) \times Vt$$

Dans la configuration *dcc* est supérieur à 0.

$$YC = \left(\frac{(E1E2 - dcc)}{tg(\alpha_1) + tg(\alpha_2)}\right)$$

10

Où **E1E2** est la distance entre les points **E1**, et **E2** symbolisant les centres optiques des capteurs de lumière.

Connaissant le diamètre **Ø** du récipient, la distance de tir, donc la position transversale **YR** de la zone de marquage **R** est :

$$YR = YC - Ø/2.$$

Il est possible maintenant de déterminer la position longitudinale **XC(t)** par exemple à l'instant **TM2** c'est-à-dire à l'ordonnée de la position **P'2** : **X(P'2) = XC(TM2).**

$$XC(TM2) = E1E2 - YC.\, tg(\alpha_2)$$

L'instant de tir ou de marquage **Ttir** est alors l'instant où la zone de marquage **R** croise l'axe de marquage **At** de coordonnées **X(T).** Afin que le marquage se fasse au centre, l'instant de tir ou de marquage **Ttir** est l'instant lorsque le centre du récipient **(XC(t), YC)** croise l'axe de marquage **At,** c'est-à-dire quand l'ordonnée **XC** du centre du récipient correspond à **X(T)** :

$$Ttir = (X(T) - XC(TM2))/V\, t$$

Si le diamètre **Ø** est inconnu a priori, alors ce diamètre peut être estimé en utilisant les distances :

$$Ø = Vt \times (TL1 - TC1) \text{ ou bien } Ø = Vt \times (TL2 - TC2)$$

Autrement dit, selon une variante avantageuse, on utilise pour les calculs visant à déterminer le diamètre des récipients, les instants de l'intersection **TC1** et du dégagement **TL1** de l'axe optique **A1,** ou bien les instants de l'intersection **TC2** et du dégagement **TL2** de l'axe optique **A2.** Le diamètre calculé peut permettre par exemple de préciser la distance de tir, donc la position transversale **XR** de la zone de marquage **R,** par exemple pour des régions coniques des récipients.

On peut également déterminer l'instant **TM1** (resp. **TM2**) où le centre **C** du récipient croise l'axe optique **A1** en un point **P1** (resp. **A2**) comme suit, sans calculer réellement le diamètre :

$$TM_1 = \frac{(TL1 - TC1)}{2} \quad TM_2 = \frac{(TL2 - TC2)}{2}$$

Dans le cas de récipients dont la section par le plan de détection n'est pas circulaire mais seulement symétrique, les formules ci-dessus s'appliquent en considérant l'instant **TM1** (respectivement **TM2**) comme l'instant où le centre de symétrie **XC(t), YC** du récipient croise l'axe optique **A1** (resp. **A2**) en un point **P'1** (resp. **P'2).** Un récipient de forme symétrique est un récipient tel que l'enveloppe de sa section par le plan de détection présente une symétrie centrale. Les formes sont par exemple des rectangles, carrés, ovales, ellipses. Par exemple lorsque le plan de détection **Pd** est positionné au niveau du corps (pour graver au corps), la section est rectangulaire, carrée, elliptique, etc.

Il est également possible de déterminer par le procédé conforme à l'invention l'orientation θ des récipients autour de l'axe vertical **Z.** Cette orientation θ est considérée comme nulle si la zone de marquage est parallèle à l'axe longitudinal **X** c'est-à-dire perpendiculaire à l'axe transversale **Y.** Ceci permet de corriger encore plus précisément la distance de tir **YR** et l'instant de tir pour bien positionner le marquage par exemple au centre de la grande face **20** d'un parallélépipède comme illustré aux Fig. 6A à 6C montrant un récipient de section rectangulaire présentant une grande face plane **20** sur laquelle est réalisée la zone de marquage **R.**

A la **Fig. 6B,** il apparaît nécessaire pour un récipient **2** avec une orientation θ par rapport à l'axe longitudinal **X,** de retarder l'instant de marquage **Ttir** et de focaliser le faisceau laser de marquage en retrait par rapport à un récipient passant avec une orientation θ nulle.

Selon une variante de l'invention, le plan de focalisation peut être déplacé également pendant le marquage, lorsque la zone de marquage **R** est grande par rapport à la courbure de la surface de la zone de marquage **R.** Pour ce faire il est nécessaire que l'unité de commande connaisse la forme de la zone de marquage **R** et calcule également l'orientation θ de chaque récipient.

Un autre effet de l'orientation θ de chaque récipient, est que lorsque la face n'est pas normale au faisceau laser, la géométrie du marquage est modifiée. Par exemple, un carré projeté produira un marquage en forme de trapèze comme illustré à la **Fig. 8A.** Autrement dit, le marquage subit une « déformation en trapèze ». Dans le cas d'un code DATAMATRIX destiné à la lecture automatique, la déformation présente un risque de mauvaise lecture, même si le lecteur est apte à lire des codes un peu déformés. Ainsi, pour un récipient se présentant avec une orientation θ non nulle, il est recommandé de corriger la géométrie du marquage.

Selon une variante avantageuse de l'invention, l'unité de commande **14** détermine grâce aux capteurs du système de localisation **15,** l'orientation θ de chaque récipient et pilote le dispositif de balayage **10** pour corriger la géométrie du marquage en annulant la déformation en trapèze c'est-à-dire pour obtenir un marquage avec une géométrie conforme à celle souhaitée.

Selon un exemple avantageux de l'invention, l'orientation θ de chaque récipient étant connu, on connaît l'angle d'incidence du faisceau laser sur la zone de marquage supposée ici en surface d'une face plane du récipient. Par définition ici, l'angle d'incidence est l'angle du faisceau laser avec la normale à la surface atteinte. Comme illustré à la **Fig. 6C,** l'angle d'incidence du faisceau **F** sur la face **20** du récipient **2** vaut également θ. Du fait de cet angle d'incidence, la géométrie du marquage peut être déformée par la projection non orthogonale sur la face réceptrice. Cette déformation de la géométrie du marquage peut avoir pour conséquence dans le cas d'un code barre ou DATAMATRIX, des difficultés de relecture par des lecteurs optiques dédiés.

Cet inconvénient est pallié selon l'invention en considérant l'orientation θ de chaque récipient pour piloter le système de balayage **10** afin de produire un marquage conservant la géométrie voulue sur chaque récipient. Ainsi, selon une variante de l'invention, l'on détermine l'orientation θ de chaque récipient par rapport à la direction de déplacement **D** et l'on pilote le système de balayage du faisceau laser **F** afin de produire un marquage de géométrie constante sur la zone de marquage quel que soit son orientation par rapport à la direction de déplacement **D.**

Lorsque le marquage est constitué par exemple d'un ensemble de creux correspondant chacun à un impact du faisceau laser, chaque creux constituant un point d'un code à points par exemple de type DATAMATRIX, la bonne géométrie tridimensionnelle de chaque creux (position, circularité et profondeur du relief) a pour effet que le creux sera facilement détecté par un lecteur automatique de code. Dans le cas où l'angle d'incidence du faisceau laser **F** sur la zone de marquage est élevé, les points d'un code à point peuvent être avoir leur géométrie altérée. Autrement dit, si l'angle d'incidence du faisceau laser **F** dépasse un seuil, la qualité de marquage est détériorée.

Il est prévu selon une variante de réalisation, de déterminer l'orientation θ autour de l'axe vertical **Z** de chaque récipient, dont dépend l'angle incident du faisceau laser, et dans le cas où l'angle d'orientation θ dépasse une valeur de seuil d'angle correspondant à une valeur de qualité de marquage, une des actions opérations suivantes est faite :

- on ne marque pas les récipients mal orientés ;
- on déclenche une information d'alerte en indiquant éventuellement les sections d'origine des récipients mal orientés ;
- on corrige les mécanismes de mise en ligne des récipients.

Selon un exemple préféré de réalisation, un des deux axes optiques **A1** ou **A2** est orthogonal à la direction de translation. Dans le cas où le premier axe optique **A1** est orthogonal à la direction de translation, la position longitudinale **XC** est déduite :

- de l'instant **TC1** auquel l'axe optique **A1** libre est intersecté ou de l'instant **TL1** auquel l'axe optique **A1** est dégagé par le récipient chaud ;
- de la vitesse du convoyeur ;
- de la longueur longitudinale ou du diamètre longitudinal dans la direction de translation de la section du récipient pris au niveau du plan de détection.

Bien entendu, les calculs décrits ci-dessus sont donnés à titre d'exemples non limitatifs. La position transversale des récipients et la position longitudinale des récipients peuvent être déterminées de manière différente. D'une façon générale, l'installation **1** comporte un dispositif permettant la mise à disposition pour l'unité de traitement **15$_2$,** de différentes informations pour réaliser ces calculs. Un tel dispositif telle qu'une interface homme/machine ou une mémoire interne, dispose des informations prises parmi la liste suivante :

- la position longitudinale des capteurs de lumière **E1, E2** ;
- la distance transversale entre les différents éléments des capteurs de lumière **E1, E2** ;
- l'angle des axes optiques **A1, A2** des capteurs de lumière avec la direction transversale à la translation **Y;**
- des dimensions telle que le diamètre **Ø** pour un récipient cylindrique ou la largeur et la longueur **L** x **l** pour des récipients de forme;
- la vitesse du convoyeur **Vt** ;
- la hauteur de la région de marquage **R** par rapport au plan du convoyeur ;
- la position longitudinale de l'axe de marquage **At.**

Cette interface homme/machine et/ou de même, cette mémoire interne de l'unité de commande **14,** peut être la même que celle nécessaire à procurer les autres paramètres de marquage tels que la puissance laser, les vitesses de balayage, le type de marquage, de code, le contenu des informations à marquer, et donc tous les paramètres nécessaires au marquage laser.

Pour réaliser un marquage par le faisceau laser, un dispositif de balayage dévie généralement le faisceau horizontalement et verticalement. Lorsque les récipients à marquer sont fixes durant le marquage, alors les déplacements de balayage horizontaux et verticaux ne sont déterminés que par les dimensions et géométries du motif et la distance généralement constante de la zone de marquage. La distance intervient en effet puisque la déviation du faisceau est une déviation angulaire par déflecteur (miroir galvanométrique) alors la distance de la zone de marquage par rapport au faisceau laser est prise en compte pour déterminer les mouvements de balayage. Autrement dit, si la zone de marquage est plus éloignée alors les angles de déviation du faisceau laser par le dispositif de balayage sont réduits verticalement et horizontalement. De simples calculs de trigonométries sont suffisants et peuvent être facilement être déterminés par l'homme du métier.

Pour le marquage de récipients mobiles, il est connu que le faisceau laser doit en même temps parcourir la zone de marquage comme pour un récipient fixe, mais également suivre le déplacement longitudinal des récipients. Les balayages vertical et horizontal sont compensés pour prendre en compte le déplacement des récipients. Il suffit de connaître la vitesse de déplacement, laquelle peut d'ailleurs être généralement constante, alternativement elle est mesurée, ces deux alternatives étant possibles dans le procédé selon la présente invention. La prise en compte du déplacement des récipients dépend également de la distance de la zone de marquage qui est généralement constante.

Pour le marquage de récipients chauds défilant sur un convoyeur de sortie avec un alignement imparfait, la position transversale **YR** de la zone de marquage, donc la distance entre la fenêtre de sortie du laser et la zone de marquage varie. De cela peut résulter une variation d'un récipient à l'autre des dimensions verticale et horizontale du marquage ou de la zone de marquage **R.**

Selon une variante avantageuse de l'invention, la prise en compte du déplacement des récipients consiste à prendre en compte la vitesse de déplacement longitudinale qu'elle soit constante ou non, connue ou bien elle peut être mesurée, et la distance de la zone de marquage.

Dans le cas de l'invention, où les récipients se déplacent dans la direction longitudinale qui est quasiment horizontale, la compensation du déplacement vertical du faisceau en fonction de la distance est recommandée mais n'est pas absolument nécessaire, car l'effet vertical est faible. A contrario, l'effet de la distance sur la dimension horizontale de la zone de marquage est forte en raison du déplacement.

Autrement dit, selon une variante avantageuse de l'invention, on mesure la position transversale **YR** de la zone de marquage **R** de chaque récipient, puis l'unité de commande pilote le dispositif de balayage du faisceau laser pour adapter au moins les déplacements horizontaux du faisceau laser en fonction de la vitesse de déplacement et de la position transversale YR de la zone de marquage **R** de chaque récipient afin de maintenir constante au moins la largeur de la zone de marquage.

L'appareil laser **9** est réglable en hauteur. Plus exactement, selon l'invention, la fenêtre de sortie du faisceau laser est réglable en hauteur par rapport au plan de convoyage **Pc.** Selon une variante, la position du dispositif de balayage **10** est indépendante de celle de l'appareil laser qui est fixe. En effet, le système commercialisé sous la dénomination « Multiscan » de la société ROFIN dispose d'un moyen de conduire le faisceau laser depuis la source jusqu'au dispositif de balayage, au sein d'un bras articulé. Dans une autre configuration, une partie plus importante de l'appareil laser se déplace en hauteur, par exemple la source, le dispositif de balayage et le dispositif de déplacement du plan de focalisation. Ces réglages sont prévus habituellement manuels mais peuvent être motorisés. Ainsi, les moyens de réglage peuvent être constitués par tout moyen, tel que des vérins, des leviers ou des vis sans fin actionnées par manivelles. S'ils sont motorisés, les manivelles sont par exemple remplacées par des moteurs électriques.

Selon une variante de la compensation de dérive de hauteur, l'unité de commande **14** pilote des moyens de réglage de hauteur en fonction des dérives de hauteur. Ces moyens de réglage déplacent l'appareil laser complet ou au moins le dispositif de balayage portant la fenêtre de sortie du laser.

Selon une autre caractéristique de l'invention, le procédé selon l'invention mesure la hauteur de l'axe de marquage **At** par rapport au plan de convoyage **Pc** et pilote l'appareil laser **9** de manière que l'axe de marquage **At** soit positionnée à une hauteur souhaitée par rapport au plan de convoyage **Pc.** La hauteur de la région de marquage **R** est toujours convenablement positionnée par rapport au fond des récipients, donc au plan de pose des récipients, quelques soient les variations de hauteur du convoyeur. Différentes solutions peuvent être mises en œuvre pour maintenir la zone de marquage ou l'axe de marquage à une hauteur fixe par rapport au plan de convoyage **Pc.**

Selon une variante de la compensation de hauteur, l'unité de commande pilote les moyens de réglage de hauteur en fonction de la mesure de hauteur du plan de convoyage. Ces moyens de réglage déplacent l'appareil laser complet ou au moins le dispositif de balayage portant la fenêtre de sortie du laser. Ces moyens de réglages peuvent être ceux qui permettent le réglage au changement de fabrication pour positionner la zone de marquage **R** en fonction de la production et notamment des modèles de récipients fabriqués et de la hauteur du convoyeur de sortie de la machine de formage.

Dans ce cas, l'amplitude de réglage est d'au moins 400 millimètres. Dans une autre variante, les moyens de compensation de dérive de hauteur visant à corriger les dérives de hauteurs ont une amplitude de réglage inférieure à 30 mm et sont différents des moyens de réglage de hauteur lors du changement de fabrication qui ont une amplitude d'au moins 400 mm. Contrairement aux moyens de réglage de hauteur lors du changement de fabrication qui sont soit manuels, soit motorisés les moyens de compensation de hauteur visant à corriger les dérives de hauteurs sont nécessairement motorisés et pilotés par l'unité de commande **14.** L'installation comporte donc un capteur de hauteur de convoyeur. Ce capteur mesure régulièrement la hauteur du plan de convoyage **Pc** du convoyeur par rapport à une référence liée au faisceau laser, au sol ou à la position recherchée pour le plan de convoyage. Le capteur de hauteur peut être de tout type. Un capteur de distance peut être installé. On peut utiliser un capteur optique de distance, par exemple à triangulation. Mais un capteur mécanique est également utilisable, par exemple un capteur à fil tendu.

Pour compenser les dérives de hauteur, l'unité de commande **14** peut également commander le dispositif de balayage **10** de manière à déplacer la zone de marquage. C'est alors le dispositif de balayage du faisceau laser qui déplace donc la zone de marquage. Autrement dit, le dispositif de balayage **10** incline vers le haut ou vers le bas la direction moyenne du faisceau laser en fonction des dérives de hauteur détectées par les capteurs de hauteur du convoyeur.

Lorsque la hauteur du convoyeur varie, le plan de détection **Pd** doit rester de préférence voisin ou aligné sur la région de marquage. Par exemple, le plan de détection est à une hauteur constante par rapport au convoyeur. Dans le cas où la compensation de hauteur est obtenue par déplacement du dispositif à balayage ou de l'appareil laser complet, alors le plan de détection **Pd** peut être solidaire du dispositif à balayage ou de l'appareil laser. Pour un dispositif simple on prévoit donc que les capteurs optiques **E1, E2** sont maintenus par un support solidaire de l'appareil laser, avec le plan de détection positionné pour coïncider avec la fenêtre de sortie du laser quel que soit le réglage en hauteur de l'appareil laser.

A contrario, lorsque la compensation de dérive de hauteur est opérée par déviation du faisceau de marquage (déplacement de la zone de marquage par le pilotage du dispositif à balayage) alors il est prévu que le plan de détection reste solidaire du convoyeur. Dans ce cas il sera prévu un réglage en hauteur du plan de détection par rapport au convoyeur lors du changement de fabrication, donc lors du réglage de la position nominale de la zone de marquage.

Pour un dispositif simple on prévoit donc que les capteurs optiques **E1, E2** maintenus par un support solidaire du convoyeur, ledit support étant réglable en hauteur par rapport au convoyeur pour les phases de réglage. Un repère visuel peut être prévu pour placer le plan de détection au niveau de la zone de marquage ou de la fenêtre de tir du laser.

La machine de formage peut être réglée pour fabriquer en même temps plusieurs modèles différents de récipients. Dans cette situation, certaines sections de la machine de formage ne produisent pas les mêmes modèles de récipients que d'autres sections. Peuvent alors défiler dans l'installation de marquage, une succession de récipients différents, avec chacun une zone de marquage placée à une hauteur différente. L'unité de commande connaît par le procédé de synchronisation la section d'origine de chaque récipient au moment de son passage devant l'appareil laser. En fonction de la section d'origine de chaque récipient, l'unité de commande **14** pilote le dispositif de balayage du faisceau laser **F** de manière à positionner la zone de marquage **R** à la hauteur adaptée à chaque modèle de récipient **2.** Par exemple, si la production comporte des articles de 300mm de haut et des articles de 350mm de haut, avec la nécessité de placer un code DATAMATRIX à 30 mm en-dessous du sommet (ou de la surface de la bague) pour les deux types, alors la zone de marquage devra être positionnée soit à 270mm, soit à 320mm au-dessus du plan de convoyage **Pc** en fonction de la section d'origine des récipients. Bien entendu le déplacement de la zone de marquage a une amplitude limitée par les capacités du dispositif de balayage.

Selon une variante de l'invention donc, l'unité de commande pilote le dispositif de balayage du faisceau laser pour adapter la hauteur de la zone de marquage en fonction de la section d'origine de chaque récipient lorsque la succession de récipients à marquer comporte des récipients de modèles différents.

Selon une caractéristique avantageuse de réalisation, le procédé selon l'invention mesure l'inclinaison du plan de convoyage **Pd.** Cette mesure de l'inclinaison est prise en compte par la connaissance de l'inclinaison du convoyeur de sortie ou par une mesure par un capteur d'inclinaison. Le faisceau laser est piloté en prenant en compte l'inclinaison du plan de convoyage afin que le marquage conserve sa géométrie en fonction de l'inclinaison détectée.

En effet, le convoyeur peut avoir une pente variable, donc une inclinaison par rapport au sol. Si le convoyeur n'est pas horizontal, alors l'axe des récipients n'est pas vertical et la direction de déplacement **D** n'est pas horizontale. La conséquence possible est une déformation du marquage telle qu'un marquage théoriquement carré prend la forme d'un losange comme illustré à la **Fig. 8B.** Il apparaît la nécessité que le dispositif de balayage, qui est piloté pour dévier le faisceau laser **F** en suivant le déplacement **D** des articles durant l'opération de marquage, réalise les déviations du faisceau laser **F** selon l'inclinaison des récipients et surtout leur direction de déplacement, donc selon l'angle d'inclinaison du convoyeur. Il peut être prévu de positionner le dispositif à balayage en le dotant d'un axe de liberté supplémentaire, donc une rotation autour de l'axe de tir ou transversal **Y.** Selon une variante, on incline l'appareil laser complet du même angle. Ce réglage est manuel ou motorisé.

Une solution préférée consiste à prendre en compte l'inclinaison par rapport à l'appareil de marquage du plan de convoyage **Pc** afin de piloter le dispositif de balayage laser, de manière à conserver la géométrie du marquage, et donc d'éviter une déformation en losange du marquage. Cette solution moins coûteuse et fiable permet un réglage automatique sans déplacement mécanique des organes de l'appareil laser.

L'angle d'inclinaison peut être saisie sur l'IHM de l'unité de commande **14** . Pour rendre automatique ce réglage en fonction de l'inclinaison du convoyeur il est nécessaire de mesurer l'inclinaison du convoyeur.

Une solution consiste à utiliser deux capteurs de hauteur de convoyeur, éloignés entre eux. Par trigonométrie, les deux hauteurs délivrent à l'unité de commande **14,** l'inclinaison du convoyeur.

Une alternative est d'utiliser un inclinomètre, solidaire du convoyeur. Il existe par exemple des inclinomètres à base de MEMS, qui donnent l'inclinaison d'un objet selon un axe, en utilisant l'effet de pesanteur sur une masselotte ou un liquide.

Selon l'invention, l'installation peut donc être équipée d'un moyen de mesurer l'inclinaison du convoyeur, l'unité de commande étant reliée à ce moyen et configurée pour, en fonction de l'angle d'inclinaison du convoyeur, pour piloter le dispositif de balayage de manière conserver la géométrie du marquage .

Il peut de préférence être prévu d'incliner le plan de détection **Pd** pour le maintenir parallèle au plan de convoyage **Pd,** et ce quel que soit le moyen de régler la hauteur, ou de corriger les dérives de hauteur, que les capteurs **E1** et **E2** soient solidaires du convoyeur ou de l'appareil de laser **9.**

Selon une caractéristique de réalisation, le premier axe optique du premier capteur de lumière et le deuxième axe optique du deuxième capteur de lumière forment entre eux un angle compris entre 5° et 60° Cet angle est représenté par l'ange β sur la **Fig. 9.** Cette caractéristique permet de tenir compte de l'espacement et du décalage entre les récipients. Un axe optique **A1** avec un angle supérieur par rapport à l'axe transversal **Y** ne serait pas libéré entre le passage de deux récipients consécutifs. Autrement dit, l'angle entre un axe optique pour la détection et la direction transversale **Y** ne doit pas dépasser l'angle entre la direction transversale **Y** et une droite tangente à deux récipients successifs ayant entre eux le décalage transversal maximum.

Le support des capteurs optiques **E1, E2** peut être équipé de réglages des angles des axes **A1** et **A2** par rapport à la direction transversale, soit les angles $\alpha_1$ et $\alpha_2$ compris chacun entre 45° dans le sens horaire et 45° dans le sens antihoraire.. Ce réglage aura pour objectif de créer entre les deux axes optiques un angle entre 5° et 60°. Par exemple $\alpha_1$ vaut 0°, et $\alpha_2$ vaut 20°.

Selon une caractéristique de l'invention, un pyromètre optique de surveillance **18** est disposé pour fournir à partir de la radiation infra-rouge émise par les récipients chauds, une mesure de la température de la zone de marquage **R** au moment où ladite zone coupe son axe optique, afin de déterminer si ladite température est supérieure à un seuil de température tel que la gravure sera de bonne qualité. Ce pyromètre optique de surveillance **18** est disposé en amont de l'appareil laser **9** pour fournir une mesure de la température de la zone de marquage **R** juste avant l'opération de marquage par l'appareil laser.

Selon une variante préférée de l'invention, le pyromètre optique de surveillance **18** mesure la température de surface du récipient. Il est donc peu sensible au rayonnement traversant le verre. Par exemple, le pyromètre optique de surveillance **18** est sensible à des longueurs d'onde supérieures à 3 microns, de préférence supérieure à 5 microns, par exemple entre 5 et 8 microns.

Le procédé selon l'invention prévoit de marquer un code contenant une information sur la cavité d'origine de chaque récipient. L'unité de commande connaît donc par le procédé de synchronisation, la cavité et/ou la section d'origine de chaque récipient au moment de son passage devant l'appareil laser, et de manière évidente, au moment de la mesure de température de la zone de marquage **R.** L'unité de commande peut donc associer la température de la zone de marquage, et les défauts de cette température aux cavités ou sections qui posent problème. A priori les récipients présentant une zone froide sont ceux provenant des sections les plus éloignées du poste de marquage, mais d'autres causes que le refroidissement durant le convoyage peuvent expliquer que d'autres sections présentent ce défaut.

Un moyen d'action consiste à réchauffer les zones de marquage par une flamme en amont du poste de marquage. Mais il peut apparaître l'inconvénient de créer des zones de marquage trop chaudes. Il est donc avantageux de n'agir uniquement que sur les récipients provenant de certaines cavités ou certaines sections.

Dans le au cas où la mesure de température de la région de marquage **R** serait inférieure à un seuil déterminé typiquement égale à 450°C, au moins une des actions suivantes est opérée :

- positionnement d'un signal d'alarme, éventuellement repris par une alerte visuelle, sonore ou autre, destinée aux opérateurs de la ligne ;
- le non marquage du récipient dont la mesure de température est insuffisante ;
- la mise en fonctionnement d'un dispositif de réchauffage de la zone de marquage, tel par exemple qu'une flamme de bec de gaz dirigée sur la zone de marquage, situé en amont de l'appareil laser, permanent ou intermittent en fonction des sections et/ou cavités d'origine des récipients;
- une modification du procédé de formage des récipients, visant à relever la température de la zone de marquage pour au moins les sections et/ou cavités concernées par le défaut de température.

Il résulte de ce qui précède que selon le procédé, l'unité de commande **14** pilote le dispositif de balayage du faisceau laser en fonction de la positon transversale **YR** de la zone de marquage déterminée pour chaque récipient, éventuellement (pour les récipients de forme) de l'orientation θ autour de l'axe vertical **Z** de chaque récipient, de l'inclinaison du convoyeur, de la hauteur du convoyeur mesurée régulièrement, pour obtenir un marquage correctement placé sur l'article en hauteur selon **Z** par rapport au plan de convoyage, en centrage selon X ou par rapport à une face de l'article, et en inclinaison par rapport au plan de convoyage, et de dimension horizontale selon X conforme.

Selon le procédé, l'unité de commande pilote le dispositif de balayage du faisceau laser en fonction de la position transversale **YR** (voire également verticale **XR**) de la zone de marquage déterminée pour chaque récipient pour que la marque ait une dimension verticale constante.

Selon le procédé, on surveille l'orientation des récipients et la température de la région de marquage afin de garantir une bonne qualité de marquage, et permettre une intervention ou correction du procédé en cas de dérive.

Le procédé permet donc de garantir la stabilité de la géométrie et du rendu du marquage sur les récipients chauds en sortie de la machine de formage.

Il ressort de la description qui précède que l'objet de l'invention permet de marquer des récipients en sortie d'une machine de formage :

- avec une zone de marquage dont la position est détectée de manière simple et peu coûteuse, à l'aide de au moins deux capteurs de lumière avec des axes optiques non parallèles et/ou,
- avec un marquage présentant une bonne qualité car l'opération de marquage est réalisée uniquement si le récipient possède la température adaptée et/ou,
- avec une zone de marquage positionnée sur le récipient à l'endroit souhaité quelque soient les variations de hauteur du plan de convoyage et/ou
- avec un marquage selon une inclinaison donnée par rapport au plan de pose du récipient et/ou
- avec un marquage dont la largeur est maitrisée quelle soient la vitesse de déplacement et la position transversale des récipients et/ou
- avec une zone de marquage dont l'orientation par rapport à la direction de déplacement est déterminée pour conserver une qualité de marquage.

L'invention n'est pas limitée aux exemples décrits et représentés car diverses modifications peuvent y être apportées sans sortir de son cadre.

**Revendications**

1. - Procédé pour marquer en sortie d'une machine de formage **(3)** à l'aide d'un faisceau laser, une zone de marquage **(R)** sur des récipients chauds en verre **(2)** posés sur un plan de convoyage **(Pc)** d'un convoyeur **(5)** et défilant en translation successivement devant un appareil laser **(9)**, le procédé comportant les étapes suivantes :

   - déterminer pour chaque récipient avant son marquage, la position longitudinale **(XR)** selon la direction de translation et la position transversale **(YR)** selon une direction **(Y)** transversale par rapport à la direction de translation **(D)** de la zone de marquage **(R)** ;
   - déplacer selon la direction transversale **(Y)** le plan de focalisation du faisceau laser en fonction de la position transversale de la zone de marquage de chaque récipient pour optimiser l'opération ultérieure de marquage des récipients défilant devant le faisceau laser ;
   - et réaliser sur la zone de marquage de chaque récipient, un marquage selon un axe de marquage **(At)** par le faisceau laser dont la position du plan de focalisation a été optimisée pour assurer le marquage,

   **caractérisé en ce qu'**il consiste pour déterminer la position longitudinale et la position transversale de la zone de marquage de chaque récipient :

   - à positionner un premier axe optique **(A1)** d'un premier capteur de lumière **(E1)** et un deuxième axe optique **(A2)** d'un deuxième capteur de lumière **(E2)** de façon non parallèle entre eux, dans un plan de détection **(Pd)** parallèle au plan de convoyage **(Pc)** et situé à une hauteur sécante à la zone de marquage, le premier axe optique **(A1)** et le deuxième axe optique **(A2)** étant situés de manière que chaque récipient est amené à croiser chaque axe optique lors de sa translation avant le marquage, la direction des axes optiques **(A1)** et **(A2)** par rapport à la direction de déplacement et leur position par rapport à l'axe de marquage **(At)** étant connues ;
   - à détecter l'instant de l'intersection **(TC1)** ou du dégagement **(TL1)** par un récipient, du premier axe optique **(A1)** et l'instant de l'intersection **(TC2)** ou du dégagement **(TL2)** par un récipient, du deuxième axe optique **(A2)** ;
   - et à calculer lesdites positions transversale et longitudinale à partir de ces instants et en considération d'une vitesse de translation **(Vt)** connue ou constante des récipients ;
- le procédé consistant à partir de la détermination de la position longitudinale de la zone de marquage, à déterminer l'instant de marquage pour chaque récipient défilant devant l'appareil laser **(9).**

2. - Procédé selon la revendication 1, **caractérisé en ce qu'**il consiste à :

- détecter l'instant de l'intersection **(TC1)** du premier axe optique **(A1)** par un récipient chaud, et
- détecter l'instant de dégagement **(TL1)** du premier axe optique **(A1)** par un récipient chaud, et
- détecter l'instant de l'intersection **(TC2)** du deuxième axe optique **(A2)** par un récipient chaud, et
- détecter l'instant de dégagement **(TL2)** du deuxième axe optique **(A2)** par un récipient chaud,

pour en déduire la position transversale et longitudinale **(XC, YC)** du centre de symétrie centrale **(C)** de la section par le plan de détection, de l'enveloppe de chaque récipient, et pour déduire la position longitudinale **(XR)** de la zone de marquage **(R)** à partir d'au moins la position longitudinale **(XC)** du centre de symétrie **(C),** et pour déduire la position transversale **(YR)** de la zone de marquage **(R)** à partir d'au moins la position transversale **(YC)** du centre de symétrie **(C).**

3. - Procédé selon la revendication 2, dans lequel à partir des quatre instants d'intersection **(TC1, TC2)** et de dégagement **(TL1, TL2)** du premier capteur et du deuxième capteur, on détermine l'orientation (θ) de la section du récipient par le plan de détection **(Pd)** de l'enveloppe de chaque récipient, et en fonction de ladite orientation (θ), on :

- détermine la position transversale **(YR)** et la position longitudinale **(XR)** de la région de marquage **(R)** ;
- et/ou pilote le dispositif de balayage pour obtenir un marquage avec une géométrie conforme à celle souhaitée ;
- et/ou délivre une information d'alerte lorsque l'orientation (θ) dépasse une valeur de qualité de marquage.

4. - Procédé selon l'une des revendications précédentes, selon lequel on positionne les axes optiques **(A1, A2)** des capteurs de lumière **(E1, E2)** de sorte que le plan de détection **(Pd)** soit sécant à la zone de marquage **(R)** et au milieu de la zone de marquage.

5. - Procédé selon l'une des revendications précédentes, selon lequel le premier axe optique **(A1)** du premier capteur de lumière **(E1)** et le deuxième axe optique **(A2)** du deuxième capteur de lumière **(E2)** forment entre eux un angle (β) compris entre 5° et 60°.

6. - Procédé selon l'une des revendications précédentes, selon lequel au moins un capteur de lumière **(E1, E2)** reçoit selon son axe optique, en l'absence d'un récipient **(2)** coupant son axe optique, un faisceau de lumière provenant d'un émetteur du capteur de lumière, les instants de l'intersection **(TC1, TC2)** et de dégagement **(TL1, TL2)** étant détectés respectivement par la disparition et l'apparition de lumière reçue par un récepteur de lumière du capteur de lumière, lors du passage d'un récipient.

7. - Procédé selon l'une des revendications précédentes, selon lequel au moins un capteur de lumière **(E1, E2)** est un pyromètre optique de localisation sensible à la radiation infra-rouge émise par les récipients chauds **(2),** de manière à recevoir selon son axe optique **(A1, A2)** la lumière infra-rouge émise par un récipient croisant son axe optique, les instants de l'intersection et de dégagement étant détectés respectivement par l'apparition et la disparition de la lumière infra-rouge reçue par le pyromètre optique lors du passage d'un récipient.

8. - Procédé selon l'une des revendications précédentes, selon lequel on prend en compte la mesure de la position transversale **(YR)** de la zone de marquage **(R)** pour commander l'appareil laser en adaptant au moins les déplacements horizontaux du faisceau laser en fonction de la vitesse de déplacement et de la position transversale **(YR)** de la zone de marquage **(R)** de chaque récipient afin de maintenir constante au moins la largeur de la zone de marquage.

9. - Procédé selon l'une des revendications précédentes dans lequel un pyromètre optique de surveillance **(18)** est disposé pour fournir à partir de la radiation infra-rouge émise par les récipients chauds **(2),** une mesure de la température de la zone de marquage **(R)** au moment où ladite zone coupe son axe optique, afin de déterminer si ladite température est supérieure à un seuil de température tel que la gravure est de bonne qualité.

10. - Procédé selon la revendication précédente, dans lequel au cas où la mesure de température de la région de marquage **(R)** est inférieure à un seuil déterminé, au moins une des actions suivantes est opérée :

- positionnement d'un signal d'alarme, éventuellement repris par une alerte visuelle, sonore ou autre, destinée aux opérateurs de la ligne ;
- le non marquage du récipient dont la mesure de température est insuffisante ;
- la mise en fonctionnement d'un dispositif de réchauffage de la zone de marquage, situé en amont de l'appareil laser ;
- une modification du procédé de formage des récipients, visant à relever la température de la zone de marquage.

**11.** - Procédé selon l'une quelconque des revendications précédentes selon lequel on mesure au moins régulièrement, la hauteur du plan de convoyage **(Pc),** et en ce que l'unité de commande pilote, en fonction de la mesure de hauteur du plan de convoyage, des moyens de réglage en hauteur de la position de l'appareil laser pour maintenir la zone de marquage **(R)** ou l'axe de marquage **(At)** à une hauteur fixe par rapport au plan de convoyage **(Pc).**

**12.** - Procédé selon l'une quelconque des revendications précédentes selon lequel on mesure, au moins régulièrement, la hauteur du plan de convoyage **(Pc),** et en ce que l'unité de commande pilote, en fonction de la mesure de hauteur du plan de convoyage, le système de balayage du faisceau laser pour maintenir la zone de marquage **(R)** à une hauteur fixe par rapport au plan de convoyage **(Pc).**

**13.** - Procédé selon l'une quelconque des revendications précédentes selon lequel on prend en compte l'inclinaison du plan de convoyage **(5)** et on pilote le système de balayage du faisceau laser afin de conserver la géométrie du marquage.

**14.** - Installation pour marquer, en sortie d'une machine de formage **(3),** des récipients chauds en verre **(2)** posés sur un plan de convoyage **(Pc)** d'un convoyeur **(5)** et défilant successivement, à une vitesse de translation constante ou connue, devant un appareil laser **(9),** l'installation comportant :

- un système pour déterminer avant leur marquage, la position longitudinale **(XR)** de la région de marquage **(R)** selon la direction de translation **(D)** des récipients et la position transversale **(YR)** de la région de marquage **(R)** dans une direction transversale à la direction défilement **(D)** des récipients ;
- un appareil laser **(9)** comportant un générateur de faisceau laser selon un axe de marquage **(At) ;**
- et une unité de commande **(14)** configurée pour piloter un dispositif **(11)** pour déplacer selon la direction transversale **(Y)** le plan de focalisation du faisceau laser en fonction de la position transversale **(YR)** de la région de marquage **(R)** pour optimiser l'opération de marquage des récipients défilant devant le faisceau laser, **caractérisée en ce que** le système **(15)** pour déterminer la position longitudinale et la position transversale de la zone de marquage de chaque récipient **(2)** comporte :
- un premier capteur de lumière **(E1)** présentant un premier axe optique **(A1)** et un deuxième capteur de lumière **(E2)** présentant un deuxième axe optique **(A2),** ces axes optiques **(A1, A2)** étant positionnés de façon non parallèle entre eux, dans un plan de détection **(Pd)** parallèle au plan de convoyage **(Pc)** et situé à une hauteur sécante à la zone de marquage, le premier axe optique **(A1)** et le deuxième axe optique **(A2)** étant situés de manière que chaque récipient est amené à croiser chaque axe optique lors de sa translation, la direction des axes optiques **(A1)** et **(A2)** par rapport à la direction de déplacement et leur position par rapport à l'axe de marquage **(At)** étant connues ;
- et une unité de traitement **(15$_2$)** détectant l'instant de l'intersection **(TC1)** ou du dégagement **(TL1)** par un récipient, du premier axe optique **(A1)** et l'instant de l'intersection **(TC2)** ou du dégagement **(TL2)** par un récipient, du deuxième axe optique **(A2),** et calculant lesdites positions transversale et longitudinale à partir de ces instants et en considération d'une vitesse de translation connue ou constante des récipients, cette unité de traitement déterminant l'instant de marquage pour chaque récipient défilant devant le poste de marquage, à partir de la détermination de la position longitudinale de la zone de marquage.

**15.** - Installation selon la revendication précédente dans laquelle au moins un capteur de lumière **(E1, E2)** comporte un émetteur de lumière et un récepteur de lumière, disposés de part et d'autre de la trajectoire de translation **(D)** des récipients.

**16.** - Installation selon la revendication 14, dans laquelle au moins un capteur de lumière **(E1, E2)** comporte un émetteur de lumière et un récepteur de lumière, disposés du même côté de la trajectoire de translation **(D)** des récipients, un réflecteur de lumière étant disposé selon le côté opposé pour renvoyer en direction du récepteur, la lumière provenant de l'émetteur de lumière.

**17.** - Installation selon l'une des revendications 14 à 16, **caractérisée en ce qu'**un capteur de lumière **(E1, E2)** est un capteur de lumière infrarouge ou un pyromètre optique.

**18.** - Installation selon l'une des revendications 14 à 17, **caractérisée en ce qu'**elle comporte un pyromètre optique de surveillance **(18)** disposé en amont de l'appareil laser **(9)** pour fournir une mesure de la température de la zone de marquage **(R)** au moment où ladite zone coupe son axe optique.

**19.** - Installation selon la revendication précédente **caractérisée en ce que** le pyromètre optique de surveillance **(18)** comporte une sensibilité spectrale pour mesurer la température de la surface des récipients en verre.

**20.** - Installation selon l'une des revendications 14 à 19, **caractérisée en ce qu'**un dispositif met à disposition de l'unité de traitement, les informations pris parmi la liste suivante :

- la position longitudinale des capteurs de lumière **(E1, E2)** ;
- la distance transversale entre les différents éléments des capteurs de lumière **(E1, E2)** ;
- l'angle des axes optiques **(A1, A2)** des capteurs de lumière avec la direction transversale à la translation ;
- des dimensions **(Ø** ou **L** x **l)** des récipients ;
- la vitesse du convoyeur **(Vt) ;**
- la hauteur de la région de marquage **(R)** par rapport au plan du convoyeur ;
- la position longitudinale de l'axe de marquage **(At).**

**21.** - Installation selon l'une des revendications 14 à 20, **caractérisée en ce qu'**elle comporte un capteur de l'inclinaison du plan de convoyage **(Pc),** reliée à l'unité de commande **(14)** configurée pour piloter le faisceau laser afin que la géométrie du marquage soit conservé quelle que soit de l'inclinaison détectée.

**Patentansprüche**

**1.** Verfahren zum Markieren, am Ausgang einer Formmaschine (3) mittels eines Laserstrahls, eines Markierungsbereichs (R) auf heißen Glasbehältern (2), die auf einer Förderebene (Pc) eines Förderers (5) stehen und translatorisch nacheinander an einem Lasergerät (9) vorbeilaufen, das Verfahren umfassend die folgenden Schritte:

- Bestimmen, für jeden Behälter vor seiner Markierung, der Längsposition (XR) in der Translationsrichtung und der Querposition (YR) in einer Richtung (Y) quer zu der Translationsrichtung (D) des Markierungsbereichs (R);
- Verschieben der Fokussierebene des Laserstrahls in der Querrichtung (Y) abhängig von der Querposition des Markierungsbereichs von jedem Behälter, um den anschließenden Markierungsvorgang der an dem Laserstrahl vorbeilaufenden Behälter zu optimieren;
- und Durchführen, auf dem Markierungsbereich von jedem Behälter, einer Markierung entlang einer Markierungsachse (At) durch den Laserstrahl, dessen Position der Fokussierebene optimiert wurde, um die Markierung zu gewährleisten,

**dadurch gekennzeichnet, dass** es darin besteht, die Längsposition und die Querposition des Markierungsbereichs von jedem Behälter zu bestimmen:

- Positionieren einer ersten optischen Achse (A1) eines ersten Lichtsensors (E1) und einer zweiten optischen Achse (A2) eines zweiten Lichtsensors (E2) nicht parallel zueinander in einer Erfassungsebene (Pd) parallel zu der Förderebene (Pc) und die auf einer Höhe liegt, die den Markierungsbereich schneidet, wobei sich die erste optische Achse (A1) und die zweite optische Achse (A2) derart befinden, dass jeder Behälter veranlasst wird, während seiner Translation vor der Markierung jede optische Achse zu kreuzen, wobei die Richtung der optischen Achsen (A1) und (A2) in Bezug auf die Bewegungsrichtung und ihre Position in Bezug auf die Markierungsachse (At) bekannt sind;
- Erfassen des Zeitpunkts der Überschneidung (TC1) oder der Freigabe (TL1) durch einen Behälter der ersten optischen Achse (A1) und des Zeitpunkts der Überschneidung (TC2) oder der Freigabe (TL2) durch einen Behälter der zweiten optischen Achse (A2);
- und Berechnen der Quer- und der Längsposition anhand diese Zeitpunkte und unter Berücksichtigung einer bekannten oder konstanten Translationsgeschwindigkeit (Vt) der Behälter;
- wobei das Verfahren darin besteht, anhand der Bestimmung der Längsposition des Markierungsbereichs den Markierungszeitpunkt für jeden Behälter zu bestimmen, der an dem Lasergerät (9) vorbeiläuft.

2. Verfahren nach Anspruch 1, **dadurch gekennzeichnet, dass** es Folgendes umfasst:

   - Erfassen des Zeitpunkts der Überschneidung (TC1) der ersten optischen Achse (A1) durch einen heißen Behälter, und
   - Erfassen des Zeitpunkts der Freigabe (TL1) der ersten optischen Achse (A1) durch einen heißen Behälter, und
   - Erfassen des Zeitpunkts der Überschneidung (TC2) der zweiten optischen Achse (A2) durch einen heißen Behälter, und
   - Erfassen des Zeitpunkts der Freigabe (TL2) der zweiten optischen Achse (A2) durch einen heißen Behälter,

   um daraus die Quer- und die Längsposition (XC, YC) der zentralen Symmetriemitte (C) des Schnitts durch die Erfassungsebene, der Hülle von jedem Behälter abzuleiten, und um die Längsposition (XR) des Markierungsbereichs (R) anhand mindestens der Längsposition (XC) der Symmetriemitte (C) abzuleiten, und um die Querposition (YR) des Markierungsbereichs (R) anhand mindestens der Querposition (YC) der Symmetriemitte (C) abzuleiten.

3. Verfahren nach Anspruch 2, wobei anhand der vier Zeitpunkte der Überschneidung (TC1, TC2) und Freigabe (TL1, TL2) des ersten Sensors und des zweiten Sensors die Ausrichtung ($\theta$) des Schnitts des Behälters durch die Erfassungsebene (Pd) der Hülle von jedem Behälter bestimmt wird, und abhängig von dieser Ausrichtung ($\theta$):

   - die Querposition (YR) und die Längsposition (XR) des Markierungsbereichs (R) bestimmt werden;
   - und/oder Abtastvorrichtung gesteuert wird, um eine Markierung mit einer Geometrie zu erlangen, die der gewünschten entspricht;
   - und/oder Warninformationen ausgegeben werden, wenn die Ausrichtung ($\theta$) einen Markierungsqualitätswert überschreitet.

4. Verfahren nach einem der vorherigen Ansprüche, wobei die optischen Achsen (A1, A2) der Lichtsensoren (E1, E2) positioniert werden, sodass die Erfassungsebene (Pd) den Markierungsbereich (R) und in der Mitte des Markierungsbereichs schneidet.

5. Verfahren nach einem der vorherigen Ansprüche, wobei die erste optische Achse (A1) des ersten Lichtsensors (E1) und die zweite optische Achse (A2) des zweiten Lichtsensors (E2) untereinander einen Winkel ($\beta$) zwischen 5° und 60° einschließen.

6. Verfahren nach einem der vorherigen Ansprüche, wobei mindestens ein Lichtsensor (E1, E2) entlang seiner optischen Achse in Abwesenheit eines Behälters (2), der seine optische Achse schneidet, einen Lichtstrahl empfängt, der von einem Sender des Lichtsensors kommt, wobei die Zeitpunkte der Überschneidung (TC1, TC2) und der Freigabe (TL1, TL2) jeweils durch das Verschwinden und das Auftreten von Licht erfasst werden, das von einem Lichtempfänger des Lichtsensors beim Durchgang eines Behälters empfangen wird.

7. Verfahren nach einem der vorherigen Ansprüche, wobei mindestens ein Lichtsensor (E1, E2) ein optisches Ortungspyrometer ist, das auf die von den heißen Behältern (2) ausgesandte Infrarotstrahlung reagiert, um in seiner optischen Achse (A1, A2) das Infrarotlicht zu empfangen, das von einem Behälter emittiert wird, der seine optische Achse kreuzt, wobei die Zeitpunkte der Überschneidung und der Freigabe jeweils durch das Auftreten und das Verschwinden von infrarotem Licht erfasst werden, das von dem optischen Pyrometer beim Durchlauf eines Behälters empfangen wird.

8. Verfahren nach einem der vorherigen Ansprüche, gemäß dem die Messung der Querposition (YR) des Markierungsbereichs (R) berücksichtigt wird, um das Lasergerät zu steuern, indem zumindest die horizontalen Bewegungen des Laserstrahls abhängig von der Bewegungsgeschwindigkeit und der Querposition (YR) des Markierungsbereichs (R) von jedem Behälter angepasst werden, um zumindest die Breite des Markierungsbereichs konstant zu halten.

9. Verfahren nach einem der vorherigen Ansprüche wobei ein optisches Überwachungspyrometer (18) angeordnet ist, um anhand der Infrarotstrahlung, die von den heißen Behältern (2) emittiert wird, eine Messung der Temperatur des Markierungsbereichs (R) zu dem Zeitpunkt bereitzustellen, an dem der Bereich seine optische Achse schneidet, um zu bestimmen, ob die Temperatur höher ist als ein Temperaturschwellenwert, sodass die Gravur von guter Qualität ist.

10. Verfahren nach dem vorherigen Anspruch, wobei in dem Fall, dass die Temperaturmessung des Markierungsbereichs (R) unterhalb eines bestimmten Schwellenwerts ist, mindestens eine der folgenden Aktionen durchgeführt wird:

- Positionieren eines Alarmsignals, das eventuell durch eine visuelle, akustische oder andere Warnung für die Bediener der Linie aufgegriffen wird;
- Nichtmarkieren des Behälters, dessen Temperaturmessung unzureichend ist;
- Inbetriebnehmen einer Vorrichtung zum Erwärmen des Markierungsbereichs, der sich vor dem Lasergerät befindet;
- Ändern des Verfahrens zum Bilden von Behältern, was darauf abzielt, die Temperatur des Markierungsbereichs zu erhöhen.

11. Verfahren nach einem der vorherigen Ansprüche, wobei zumindest regelmäßig die Höhe der Förderebene (Pc) gemessen wird, und dass die Steuereinheit abhängig von der Messung der Höhe der Förderebene Höheneinstellungseinrichtungen der Position des Lasergeräts steuert, um den Markierungsbereich (R) oder die Markierungsachse (At) auf einer festen Höhe in Bezug auf die Förderebene (Pc) zu halten.

12. Verfahren nach einem der vorherigen Ansprüche, wobei zumindest regelmäßig die Höhe der Förderebene (Pc) gemessen wird, und dass die Steuereinheit abhängig von der Messung der Höhe der Förderebene das System zum Abtasten des Laserstrahls steuert, um den Markierungsbereich (R) auf einer festen Höhe in Bezug auf die Förderebene (Pc) zu halten.

13. Verfahren nach einem der vorherigen Ansprüche, wobei die Neigung der Förderebene (5) berücksichtigt wird und das System zum Abtasten des Laserstrahls gesteuert wird, um die Geometrie der Markierung beizubehalten.

14. Anlage zum Markieren, am Ausgang einer Formgebungsmaschine (3), von heißen Glasbehältern (2), die auf einer Förderebene (Pc) eines Förderers (5) stehen und nacheinander mit einer konstanten oder bekannten Translationsgeschwindigkeit an einem Lasergerät (9) vorbeilaufen, die Anlage umfassend:

- ein System, um vor ihrer Markierung die Längsposition (XR) des Markierungsbereichs (R) in der Translationsrichtung (D) der Behälter und die Querposition (YR) des Markierungsbereichs (R) in einer Richtung quer zu der Laufrichtung (D) der Behälter zu bestimmen;
- ein Lasergerät (9), umfassend einen Generator für einen Laserstrahl entlang einer Markierungsachse (At);
- und eine Steuereinheit (14), die konfiguriert ist, um eine Vorrichtung (11) zum Bewegen der Fokussierebene des Laserstrahls in der Querrichtung (Y) abhängig von der Querposition (YR) des Markierungsbereichs (R) zu steuern, um den Vorgang des Markierens von Behältern, die an dem Laserstrahl vorbeilaufen, zu optimieren, **dadurch gekennzeichnet, dass** das System (15) zum Bestimmen der Längsposition und der Querposition des Markierungsbereichs von jedem Behälter (2) Folgendes umfasst:
- einen ersten Lichtsensor (E1), der eine erste optische Achse (A1) aufweist, und eine zweiten Lichtsensor (E2), der eine zweite optische Achse (A2) aufweist, wobei diese optischen Achsen (A1, A2) nicht parallel zueinander in einer Erfassungsebene (Pd) parallel zu der Förderebene (Pc) und gelegen in einer Höhe, die den Markierungsbereich schneidet, positioniert sind, wobei sich die erste optische Achse (A1) und die zweite optische Achse (A2) derart befinden, dass jeder Behälter veranlasst wird, während seiner Translation jede optische Achse zu kreuzen, wobei die Richtung der optischen Achsen (A1) und (A2) in Bezug auf die Bewegungsrichtung und ihre Position in Bezug auf die Markierungsachse (At) bekannt sind;
- und eine Verarbeitungseinheit ($15_2$), die den Zeitpunkt der Überschneidung (TC1) oder der Freigabe (TL1) durch einen Behälter der ersten optischen Achse (A1) und den Zeitpunkt der Überschneidung (TC2) oder der Freigabe (TL2) durch einen Behälter der zweiten optischen Achse (A2) erfasst und die Quer- und die Längsposition anhand dieser Zeitpunkte und unter Berücksichtigung einer bekannten oder konstanten Translationsgeschwindigkeit der Behälter berechnet, wobei diese Verarbeitungseinheit den Markierungszeitpunkt für jeden an der Markierungsstation vorbeilaufenden Behälter anhand der Bestimmung der Längsposition des Markierungsbereichs bestimmt.

15. Anlage nach dem vorherigen Anspruch, wobei mindestens ein Lichtsensor (E1, E2) einen Lichtsender und einen Lichtempfänger umfasst, die auf beiden Seiten der Translationsbahn (D) der Behälter angeordnet sind.

16. Anlage nach Anspruch 14, wobei mindestens ein Lichtsensor (E1, E2) einen Lichtsender und einen Lichtempfänger umfasst, die auf derselben Seite der Translationsbahn (D) der Behälter angeordnet sind, wobei ein Lichtreflektor auf der gegenüberliegenden Seite angeordnet ist, um das von dem Lichtsender kommende Licht in Richtung des Empfängers zu reflektieren.

17. Anlage nach einem der Ansprüche 14 bis 16, **dadurch gekennzeichnet, dass** ein Lichtsensor (E1, E2) ein Infrarot-Lichtsensor oder ein optisches Pyrometer ist.

18. Anlage nach einem der Ansprüche 14 bis 17, **dadurch gekennzeichnet, dass** sie ein optisches Überwachungspyrometer (18) umfasst, das vor dem Lasergerät (9) angeordnet ist, um eine Messung der Temperatur des Markierungsbereichs (R) zu dem Zeitpunkt bereitzustellen, an dem der Bereich seine optische Achse schneidet.

19. Anlage nach dem vorherigen Anspruch, **dadurch gekennzeichnet, dass** das optische Überwachungspyrometer (18) eine spektrale Empfindlichkeit zum Messen der Temperatur der Oberfläche von Glasbehältern umfasst.

20. Anlage nach einem der Ansprüche 14 bis 19, **dadurch gekennzeichnet, dass** eine Vorrichtung der Verarbeitungseinheit Informationen bereitstellt, die ausgewählt sind aus der folgenden Liste:

   - die Längsposition der Lichtsensoren (E1, E2);
   - der Querabstand zwischen den einzelnen Elementen der Lichtsensoren (E1, E2);
   - der Winkel der optischen Achsen (A1, A2) der Lichtsensoren mit der Richtung quer zu der Translation;
   - die Abmessungen (Ø oder L x I) der Behälter;
   - die Geschwindigkeit des Förderers (Vt);
   - die Höhe der Markierungsregion (R) in Bezug auf die Ebene des Förderers;
   - die Längsposition der Markierungsachse (At).

21. Anlage nach einem der Ansprüche 14 bis 20, **dadurch gekennzeichnet, dass** sie einen Sensor für die Neigung der Förderebene (Pc) umfasst, der mit der Steuereinheit (14) verbunden ist, die konfiguriert ist, um den Laserstrahl zu steuern, damit die Geometrie der Markierung unabhängig von der erfassten Neigung beibehalten wird.

## Claims

1. A method for marking, at the outlet of a forming machine (3) using a laser beam, a marking area (R) on hot glass containers (2) laid on a conveying plane (Pc) of a conveyor (5) and running in translation successively past a laser apparatus (9), the method including the following steps:

   - determining for each container before its marking, the longitudinal position (XR) along the translation direction and a transverse position (YR) along a transverse direction (Y) relative to the direction of translation (D) of the marking area (R);
   - moving, along the transverse direction (Y), the plane of focus of the laser beam as a function of the transverse position of the marking area of each container to optimize the subsequent operation of marking the containers running past the laser beam;
   - and making on the marking area of each container, a marking along a marking axis (At) by the laser beam whose position of the focus plane has been optimized to ensure the marking,

   **characterized in that**, in order to determine the longitudinal position and the transverse position of the marking area of each container it consists in:

   - positioning a first optical axis (A1) of a first light sensor (E1) and a second optical axis (A2) of a second light sensor (E2) in a non-parallel manner to each other, in a detection plane (Pd) parallel to the conveying plane (Pc) and located at a height secant to the marking area, the first optical axis (A1) and the second optical axis (A2) being located so that each container is caused to cross each optical axis during its translation before the marking, the direction of the optical axes (A1) and (A2) relative to the direction of displacement and their position relative to the marking axis (At) being known;
   - detecting the instant of intersection (TC1) or disengagement (TL1), by a container, of the first optical axis (A1) and the instant of intersection (TC2) or disengagement (TL2), by a container, of the second optical axis (A2);
   - and calculating said transverse and longitudinal positions from these instants and in consideration of a known or constant speed of translation (Vt) of the containers;
   - the method consisting in determining, from the determination of the longitudinal position of the marking area, the marking instant for each container running past the laser apparatus (9).

2. The method according to claim 1, **characterized in that** it consists in:

- detecting the instant of intersection **(TC1)** of the first optical axis (**A1**) by a hot container, and
- detecting the instant of disengagement **(TL1)** of the first optical axis (**A1**) by a hot container, and
- detecting the instant of intersection **(TC2)** of the second optical axis (**A2**) by a hot container, and
- detecting the instant of disengagement **(TL2)** of the second optical axis (**A2**) by a hot container,

to derive therefrom the transverse and longitudinal position **(XC, YC)** of the center of central symmetry **(C)** of the section by the detection plane **(Pd)**, of the casing of each container, and to derive the longitudinal position **(XR) of** the marking area **(R) from** at least the longitudinal position **(XC)** of the center of symmetry (C), and **to** derive the transverse position **(YR)** of the marking area **(R)** from at least the position transverse **(YC)** of the center of symmetry **(C).**

3. The method according to claim 2, wherein from the four instants of intersection **(TC1, TC2)** and disengagement **(TL1, TL2)** of the first sensor and second sensor, the orientation (θ) of the section of the container is determined by the detection plane **(Pd)** of the casing of each container, and as a function of said orientation (θ):

   - the transverse position **(YR)** and the longitudinal position **(XR)** of the marking region **(R)** are determined;
   - and/or the scanning device is driven to obtain a marking with a geometry compliant with the desired one ;
   - and/or alert information is delivered when the orientation (θ) exceeds a marking quality value.

4. The method according to any one of the precedent claims, wherein the optical axes (**A1**, **A2**) of the light sensors **(E1, E2)** are positioned so that the detection plane **(Pd)** is secant to the marking area **(R)** and in the middle of the marking area.

5. The method according to any one of the precedent claims, wherein the first optical axis (**A1**) of the first light sensor **(E1)** and the second optical axis **(A2)** of the second light sensor **(E2)** form therebetween an angle (β) comprised between 5° and 60°.

6. The method according to any one of the precedent claims, wherein at least one light sensor **(E1, E2)** receives along its optical axis, in the absence of a container **(2)** intersecting its optical axis, a light beam coming from an emitter of the light sensor, the instants of intersection **(TC1, TC2)** and disengagement **(TL1, TL2)** being detected respectively by the disappearance and appearance of light received by a light receiver of the at least one light sensor upon passage of a container.

7. The method according to any one of the precedent claims, wherein at least one light sensor **(E1, E2)** is an optical location pyrometer sensitive to the infrared radiation emitted by the hot containers (2), so as to receive along its optical axis (**A1**, **A2**) the infrared light emitted by a container crossing its optical axis, the instants of intersection and disengagement being detected respectively by the appearance and disappearance of the infrared light received by the optical pyrometer upon passage of a container.

8. The method according to any one of the precedent claims, wherein the measurement of the transverse position **(YR)** of the marking area **(R)** is taken into account in order to control the laser apparatus by adapting at least the horizontal displacements of the laser beam as a function of the speed of displacement and of the transverse position **(YR)** of the marking area **(R)** of each container in order to maintain constant at least the width of the marking area.

9. The method according to any one of the precedent claims, wherein an optical monitoring pyrometer **(18)** is disposed to provide, from the infrared radiation emitted by the hot containers **(2),** a measurement of the temperature of the marking area **(R)** at the moment when said area intersects its optical axis, in order to determine whether said temperature is above a temperature threshold such that the engraving is of good quality.

10. The method according to the preceding claim, wherein in the case that the measurement of temperature of the marking region **(R)** is below a determined threshold, at least one of the following actions is carried out:

    - Positioning of an alarm signal, possibly resumed by a visual or audible alert or the like, intended for the operators of the line;
    - the non-marking of the container whose temperature measurement is insufficient;
    - the operating of a device for heating the marking area, located upstream of the laser apparatus;
    - a modification of the container forming method, aiming at raising the temperature of the marking area.

11. The method according to any one of the precedent claims, wherein the height of the conveying plane **(Pc)** is measured at least regularly, and in that the control unit drives, as a function of the measurement of the height of the conveying plane, means for height-adjusting the position of the laser apparatus in order to maintain the marking area **(R)** or the marking axis **(At)** at a fixed height relative to the conveying plane **(Pc)**.

12. The method according to claim 1, wherein the height of the conveying plane **(Pc)** is measured at least regularly, and in that the control unit drives, as a function of the measurement of the height of the conveying plane, the laser beam scanning system to maintain the marking area **(R)** at a fixed height relative to the conveying plane **(Pc)**.

13. The method according to claim 1, wherein the inclination of the conveying plane **(5)** is taken into account and the laser beam scanning system is driven in order to maintain the geometry of the marking.

14. A facility for marking, at the outlet of a forming machine **(3),** hot glass containers **(2)** laid on a conveying plane **(Pc)** of a conveyor **(5)** and running successively, at a constant or known speed of translation, past a laser apparatus **(9),** the facility including:

   - a system for determining before their marking, the longitudinal position **(XR)** of the marking region **(R)** along the direction of translation **(D)** of the containers and the transverse position **(YR)** of the marking region **(R)** in a direction transverse to the direction **(D)** of running of the containers;
   - a laser apparatus **(9)** including a laser beam generator along a marking axis **(At); and**
   - a control unit **(14)** configured to drive a device **(11)** for moving, along the transverse direction **(Y),** the plane of focus of the laser beam as a function of the transverse position **(YR)** of the marking region **(R) in** order to optimize the operation of marking the containers running past the laser beam, **characterized in that** the system **(15)** for determining the longitudinal position and the transverse position of the marking area of each container **(2)** includes:
   - a first light sensor **(E1)** having a first optical axis (**A1**) and a second light sensor **(E2)** having a second optical axis (**A2),** these optical axes (**A1**, **A2**) being positioned in a non-parallel manner to each other, in a detection plane **(Pd)** parallel to the conveying plane **(Pc)** and located at a height secant to the marking area, the first optical axis (**A1**) and the second optical axis **(A2)** being located so that each container is caused to cross each optical axis during its translation, the direction of the optical axes (**A1**) and **(A2)** relative to the direction of displacement and their position relative to the marking axis **(At)** being known;

   and a processing unit (**15$_2$**) detecting the instant of intersection **(TC1)** or disengagement **(TL1)** by a container, of the first optical axis (**A1**) and the instant of intersection **(TC2)** or disengagement **(TL2),** by a container, of the second optical axis **(A2),** and calculating said transverse and longitudinal positions from these instants and in consideration of a known or constant speed of translation of the containers, this processing unit determining the marking instant for each container running past the marking station, from the determination of the longitudinal position of the marking area.

15. The facility according to the preceding claim, wherein at least one light sensor (E1, E2) includes a light emitter and a light receiver, disposed on either side of a path the trajectory of translation **(D)** of the containers.

16. Facility according to claim 14, wherein at least one light sensor **(E1, E2)** includes a light emitter and a light receiver, disposed on the same side of the trajectory of translation **(D)** of the containers, a light reflector being disposed along the opposite side to redirect, towards the receiver, the light coming from the light emitter.

17. The facility according to any one of claims 14 to 16, **characterized in that** a light sensor **(E1, E2) is an** infrared light sensor or an optical pyrometer.

18. The facility according to any one of claims 14 to 17, **characterized in that** it includes an optical monitoring pyrometer **(18)** disposed upstream of the laser apparatus **(9)** to provide a measurement of the temperature of the marking area **(R)** at the moment when said area intersects its optical axis.

19. The facility according to claim 18 **characterized in that** the optical monitoring pyrometer **(18)** includes a spectral sensitivity for measuring the temperature of the surface of the glass containers.

20. The facility according to any one of claims 14 to 19, **characterized in that** a device providing information relating to provides the processing unit with the information taken from the following list:

- the longitudinal position of the light sensors **(E1, E2);**
- the transverse distance between the different elements of the light sensors **(E1, E2);**
- the angle of the optical axes (**A1**, A2) of the light sensors with the direction transverse to the translation ;
- dimensions (**Ø or** L x **W)** of the containers;
- the speed of the conveyor **(Vt);**
- the height of the marking region **(R)** relative to the plane of the conveyor;
- the longitudinal position of the marking axis **(At).**

21. The facility according to any one of claims 14 to 20, **characterized in that** it includes a sensor of the inclination of the conveying plane **(Pc),** connected to the control unit **(14)** configured to drive the laser beam so that the geometry of the marking is maintained regardless of the detected inclination.

FIG.1

EP 3 870 549 B1

FIG.2

FIG.3

FIG.4

FIG.5

FIG.6A

FIG.6B

FIG.6C

FIG.7A

FIG.7B

FIG.8A

FIG.8B

FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4870922 A
- JP 09128578 B
- EP 0495647 A
- WO 2004000749 A
- US 2003052100 A
- EP 2719643 A
- EP 2368861 A